(19) Europäisches Patentamt
European Patent Office
Office européen des brevets

(11) **EP 4 255 604 B1**

(12) **EUROPEAN PATENT SPECIFICATION**

(45) Date of publication and mention
of the grant of the patent:
**23.04.2025 Bulletin 2025/17**

(21) Application number: **21827613.7**

(22) Date of filing: **03.12.2021**

(51) International Patent Classification (IPC):
**B01D 33/11** (2006.01)    **A47L 15/42** (2006.01)
**B01D 33/44** (2006.01)    **B01D 33/72** (2006.01)

(52) Cooperative Patent Classification (CPC):
**B01D 33/11; B01D 33/44; B01D 33/72;**
**D06F 39/10;** D06F 39/02

(86) International application number:
**PCT/GB2021/053162**

(87) International publication number:
**WO 2022/118034 (09.06.2022 Gazette 2022/23)**

(54) **A FILTER UNIT, A TEXTILE TREATMENT APPARATUS, USE THEREOF AND A METHOD OF FILTERING MICROPARTICLES**

FILTERVORRICHTUNG, TEXTILBEHANDLUNGSVORRICHTUNG, SEINE BENUTZUNG UND VERFAHREN ZUM FILTERN VON MIRKOPARTIKELN

DISPOSITIF FILTRANT, DISPOSITION DE TRAITEMENT DE TEXTILES, SON UTILISATION ET METHODE DE FILTRATION DE MICROPARTICULES

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **04.12.2020 GB 202019147**

(43) Date of publication of application:
**11.10.2023 Bulletin 2023/41**

(73) Proprietor: **Xeros Limited**
**Whittle Way, Catcliffe**
**Rotherham**
**South Yorkshire S60 5BL (GB)**

(72) Inventors:
• **MATTLEY, Joseph Michael**
**Rotherham South Yorkshire S60 5BL (GB)**
• **COBB, Thomas Andrew**
**Rotherham South Yorkshire S60 5BL (GB)**

(74) Representative: **Secerna LLP**
**The Old Fire Station**
**18 Clifford Street**
**York YO1 9RD (GB)**

(56) References cited:
EP-A1- 3 124 674        EP-A1- 3 727 639
WO-A1-2019/017850      CN-A- 101 545 194

## Description

## Field

The present disclosure relates to a filter unit and to a textile treatment apparatus comprising the filter unit. The present disclosure also relates to the use of the filter unit and the textile treatment apparatus, and to methods of filtering microparticles from feed liquid containing microparticles.

## Background

The washing of synthetic textiles is believed to be the largest contributor to microplastic pollution to the world's oceans, contributing an estimated 35% of primary microplastics. The release of microplastics from synthetic clothes is caused by the mechanical and chemical stresses that synthetic fabrics undergo during a washing cycle in a laundry machine. These stresses cause the detachment of microfibres from synthetic textiles. Due to their dimensions, the released microfibres partially pass through wastewater treatment plants and enter the oceans. Microfibres can be found in beaches worldwide, in the water of the Pacific Ocean, the North Sea, the Atlantic Ocean, the Artic, in deep sea sediments, and have recently been identified in human organs. Their size can cause them to be consumed by microorganisms, which are unable to digest them, causing them to persist and pass up the food chain.

There is an increasing need to prevent microfibres from entering water systems. To prevent release of microparticles from washing machines, numerous microparticle filters have been designed. Microparticle filters typically use a porous mesh with pore sizes in the order of 100 $\mu$m. These microparticle filters may catch the majority of the larger synthetic fibres, but they are unable able to catch significant amounts of microparticles smaller than 100 $\mu$m in size, synthetic or otherwise.

A number of devices have been developed to capture microparticles. One such device is described in WO 2017/173215 and is called the Cora Ball (RTM). The Cora Ball (RTM) has a plurality of arms with small teeth on it to capture microparticles therebetween. The Cora Ball (RTM) is placed in a washing machine and circulates with the laundry. In an independent test (I.E. Napper et al Science of the Total Environment, 738 (2020) 140412), the Cora Ball was shown to have a low filtration efficiency of 31% of microfibres collected from wastewater effluent. Most likely the Cora Ball will have to be cleaned after each use to prevent filtration efficiency from decreasing, placing additional demands on the user. The microparticles captured between the teeth of the Cora Ball require removing without washing so that the captured microparticles do not enter the wastewater system.

Another device also used inside the washing machine is the Guppy Friend (RTM) and is described in US2018320306. The Guppy Friend is a zipped laundry bag made from a porous material to trap microparticles released from the laundry. In the same independent test, the Guppy Friend was found to have a filtration efficiency of 54%. The Guppy Friend also requires emptying of trapped microparticles from the interior of the bag without the use of water. The Guppy Friend also requires the user to fill with synthetic laundry garments separate from natural fibre garments. The user must also empty the bag after each wash. This therefore places additional demands on the user.

Other devices attach externally between the outlet pipe of a washing machine and the wastewater drain. One example is PlanetCare (www.planetcare.org) which have developed a filter that is used external to a washing machine. The filter uses a static vertical cylindrical filter media held in a chamber. Wastewater passes through the filter media and out of the chamber. The filter becomes blocked, so periodically, the top of the chamber needs to be opened and the filter media extracted and replaced. The efficiency of the device was found to be 29% in the same independent test. Furthermore, most domestic drains are located at the rear of the washing machine, and the washing machine outlet pipe usually exits from the rear of the washing machine. This means the PlanetCare filter and those similar to it may need to be located in a place that is inaccessible by the user, typically the rear of the washing machine, or a pipe can be used to bring the filter to the side of the washing machine. Often this is impractical for users.

Another microparticle filter is described in (WO 2019/122862) filed in the name of Xeros Limited. This filter is a centrifugal filter with a rotating filter cage, where the filter cage can be removed for emptying. This filter was found to have a filtration efficiency of 79% in the same independent tests. The filter is designed to be installed inside a washing machine. However, the present inventors have since determined that the filter described in WO 2019/122862 does not immediately fit in every domestic washing machine and may require the internal layout of some domestic washing machines to be adjusted to accommodate it within the washing machine housing. Furthermore, the present inventors have since sought to improve the accessibility of the rotating filter cage described in WO 2019/122862.

EP3124674A1 discloses a filter apparatus for recycling water of a washing machine having a self-cleaning function. WO2019/017850A1 discloses a filter and method for filtering microfibres.

The present inventors have sought to address one or more than one of the following problems:

    i. A filter unit which can be easily integrated into a wider range of different washing machines, especially those currently marketed for domestic use;

    ii. An improved accessibility to the filter unit;

    iii. An improved ease of maintaining the filter unit especially in terms of removing filtered microparticles;

iv. A desire to integrate certain functionalities of the filter unit into the washing machine so as to provide a simple, familiar and effective user experience;

v. A desire to retain suitably high filtration efficiencies;

It is an object of the present disclosure to provide improvements generally and/or to address, at least in part, one or more of the abovementioned problems.

## Summary

In a first aspect, there is a filter unit for filtering microparticles from a feed liquid containing microparticles, the filter unit comprising:

a filter chamber extending along an axis, and comprising a first end wall, an opposite second end wall and at least one side wall extending therebetween, wherein both first and second end walls are coincident with the axis,

a filter cage contained within the filter chamber and configured to rotate about the axis, the filter cage comprising one or more than one filter media for filtering microparticles from the feed liquid;

an inlet configured to pass feed liquid through the first end wall into the filter chamber;

an outlet in the filter chamber for passage of filtered liquid out of the filter chamber;

a drive shaft configured to drive rotation of the filter cage, the drive shaft extending from the first end wall of the filter chamber to the filter cage;

wherein the second end wall is or comprises an opening therein and a removable lid, in a first configuration the opening is closed by the removable lid so that feed liquid cannot pass through the opening, in a second configuration the removable lid is removed from the opening so that filtered microparticles are extractable from the filter chamber through the opening.

feed liquid containing microparticles, the filter unit comprising:

a filter chamber extending along an axis, and comprising opposing first end and second end walls and at least one sidewall extending therebetween, wherein both first and second end walls are coincident with the axis,

a filter cage contained within the filter chamber and configured to rotate about the axis, the filter cage comprising one or more than one filter media for filtering microparticles from the feed liquid;

an inlet configured to pass feed liquid through the first end wall into the filter chamber;

an outlet in the filter chamber for passage of filtered liquid out of the filter chamber;

a drive shaft configured to drive rotation of the filter cage, the drive shaft extending from the first end wall of the filter chamber to the filter cage;

wherein the second end wall is or comprises an opening therein and a removable lid, in a first configuration the opening is closed by the removable lid so that feed liquid cannot pass through the opening, in a second configuration the lid is removed from the opening so that filtered microparticles are extractable from the filter chamber through the opening; and

wherein the drive shaft comprises a mechanical connection to a drive means, and said drive means is an electric motor.

## Filter chamber

The filter chamber contains the filter cage and filter media and directs the flow of the feed liquid through the filter media. The filter chamber may be a closed unit. That is to say the filter chamber is sealed during filtration in the first configuration and liquid can only enter and exit via the inlet and outlet, respectively.

The filter chamber may take a range of shapes, including substantially cylindrical, elliptical and cuboidal, amongst others. A particularly preferred shape is one that is or approximates to a cylindrical shape. Prisms based on polygons with or without smoothed edges are also examples of suitable shapes, in particular, higher order polygons i.e. those with 5 or more sides. Alternatively, shapes with a rotational symmetry of order 2 or greater about the axis may be suitable.

The filter chamber may have a length of at least 50 mm, of at least 100 mm, of at least 150 mm, of at least 200 mm, of at least 250 mm, of at least 300 mm or of at least 400 mm.

The filter chamber length may not exceed 600 mm, or 500 mm, or 400 mm or 300 mm or 200 mm.

The filter chamber may have a diameter of at least 20 mm, or of at least 30 mm, or of at least 40 mm, or of at least 50 mm, or of at least 60 mm, or of at least 70 mm or of at least 80 mm.

The filter chamber diameter may not exceed 110 mm, or 100 mm, or 80 mm, or 70 mm, or 60 mm, or 50 mm.

The end walls and side wall(s) may be connected to form the filter chamber, they may be connected by welding, adhesives, clips, bolts, screws, magnets, screw threads, interference surfaces and the like. At least some non-permanent connections may be preferred which include clips, bolts, screws, magnets, screw threads, interference surfaces and the like. Non-permanent connections may allow for disassembly and access into the filter chamber Alternatively, the end walls and side walls may be integrally formed.

The chamber walls may be made from engineering materials. Engineering materials may include polymers, metals, and/or ceramic materials. Non limiting examples of suitable metals include aluminium, titanium, and alloys for example steel (including stainless steel). Polymers may include thermoset and thermoplastic polymers. Non-limiting examples of suitable polymers include: Polyether ether ketone (PEEK), Poly(methyl methacrylate) (PMMA), Polyethylene terephthalate (PET), Polyphenylene sulfide (PPS), Poly(p-phenylene oxide) (PPO), Acrylonitrile butadiene styrene (ABS), Polybutylene terephthalate PBT, Polyether ketones (PEK), polyamides, polyimides, polyethylene, polypropylene, polycarbonates, polyacetals and polysulphones.

The first end wall and/or the second end wall may be planar or may comprise a more complex shape e.g. hemispherical and conical shapes amongst others. The first end wall and/or the second end wall may optionally be aligned perpendicular to the axis.

The filter unit comprises an axis. The axis may preferably be coincident and parallel with the centre of rotation of the filter cage. The axis may also be coincident and parallel with an axis of rotational symmetry through the filter chamber or may pass through the centre of the filter chamber (i.e. coincident with the centre of mass were the chamber to be assumed to be a homogenous body). Typically, the axis may be parallel with the horizontal direction. The side wall or side walls of the filter chamber may extend parallel to the axis. Alternatively, the filter chamber may widen from the first end wall to the second end wall.

**Removable lid and Opening**

The second end wall is or comprises an opening and a removable lid therein. In the first configuration the opening may be closed by the removable lid so that liquid cannot pass through the opening. Thus, the removable lid may be able to seal the opening in the second end wall. In the second configuration the removable lid is removed from opening and filtered microparticles are extractable from the filter chamber through the opening. Thus, it may be possible to remove the removable lid away from an opening in the second end wall.

A removable lid may comprise any element that can be fitted to the opening in the second end wall to seal it and may be removed from the opening giving access to the interior of the filter chamber. A removable lid may comprise amongst others a bung, cap, a lift flap, or any physical element suitable to fill the opening. A removable lid may be considered as an object that may be removed from the opening so that the opening is not occluded. The removable lid may be detachable from the filter chamber or from any textile treatment apparatus the filter is used with, or it may be retained thereto, e.g. by means of a cord, chain or rotatable arm.

The filter unit may comprise a retaining means to retain the removable lid in the opening in the second end wall. Non-limiting examples of retaining means include but are not limited to: screw threads between the removable lid and the second end wall; bayonet pins on one of the removable lid and the second end wall and bayonet channels on the other; one or more latches on the removable lid and/or on the second end wall; an interference fit between the removable lid and the second end wall; one or more sliding locking pins on the removable lid and/or on the second end wall; or an electromagnetic lock on one of the removable and the second end wall and a metallic or magnetic element on the other. The retaining means may be configured so that when the opening is closed by the removable lid, the removable lid imparts a biasing force inward towards the first end wall of the filter chamber. The biasing force may be opposed by the filter cage and/or by the second end wall.

The removable lid may be approximately cylindrical or disc shaped, and may be sized to fit in a circular or disc shaped opening in the second end wall.

The removable lid and/or the second end wall may comprise a seal to prevent feed liquid escaping around the removable lid. Non-limiting examples of suitable seals include: X-ring seals, O-ring seals, lip seals, cone seals, V-seals, wedge seals, bellows seals, gaskets, u-cup seals, packing seals and pusher seals. In particular, where the seal is on the removable lid, the seal may extend around the periphery of the removable lid, so that when the removable lid is placed in the opening in the second end wall, the seal is between the removable lid and second end wall.

The removable lid may comprise a handle, knob or other suitably shaped element sized for grasping by hand. Where the removable lid comprises screw threads, bayonet pins or any other retaining means that require rotation, the removable lid may comprise a handle, knob or other feature that is shaped to allow the user to rotate the removable lid by hand.

Where the retaining means comprises bayonet pins or bayonet channels, the bayonet pins may be comprised on the removable lid and the channels may be in the second end wall. The bayonet pins and bayonet channels may be configured so that a rotation of from 30 to 90 degrees is sufficient to move the pins to the ends of the channels. The bayonet channels may be angled towards the first end wall so that rotation of the removable lid when closing moves the removable lid towards the first end wall. By moving the removable lid towards the first end wall the removable lid may be used to in turn push against the filter cage to secure it in position. The opening may extend for the entirety of the second end wall. Thus, when the removable lid is removed, the second end wall is entirely the opening.

## Inlet and Outlet

The inlet and the outlet may be considered as openings into and out of the filter chamber through which feed liquid and filtered feed liquid passes during filtration. Optionally, the inlet and/or the outlet may comprise a plurality of openings in the chamber walls, collectively referred to herein in the singular as "inlet" or "outlet". The inlet is typically the only pathway through which feed liquid may enter the filter chamber and the outlet is typically the only pathway through which filtered feed liquid exits the filter chamber during filtration.

Optionally, the inlet may be coaxial with the axis. Alternatively, the inlet may be positioned radially outwards of the axis.

The outlet may be in the side wall, and optionally the outlet may be tangential to the side wall, that is to say filtered feed liquid may be able to exit via the outlet approximately in a direction that is at a tangent to the cylindrical wall. Preferably the side wall is a cylindrical side wall and the outlet tangential thereto. Alternatively, the outlet may be in the first or second end wall. Typically, the outlet is positioned further radially outwards from the axis than the inlet.

## Filter Cage

The filter cage comprises one or more than one filter media. The filter cage is preferably a rigid structure. The filter cage may permit the one or more filter media to be rotated and in particular to be rotated without the filter media becoming significantly distorted or bent by the centrifugal forces experienced during rotation. The filter cage may be unitary with the one or more filter media or they can be separate. The filter cage may comprise one of more filter cage fixings or filter cage location components to assist in fixing or locating the one or more filter media to the filter cage. The filter cage may be formed from two rigid layers with the filter media retained in between. The filter cage may comprise a lattice structure providing a series of windows between each lattice. Optionally, the filter media may extend across each window.

The filter cage may comprise a first end and a second end. The first end is the end of the filter cage adjacent to the first end wall when the filter cage is in situ in the filter chamber; and the second end is the end of the filter cage adjacent to the second end wall. Optionally, the first and second ends of the filter cage do not comprise filter media. Thus, the first and second ends of the filter cage may be non-porous.

Optionally, the filter cage may comprise an aperture at the first end of the filter cage. The aperture may permit liquid from the inlet to enter the filter cage. The filter cage may enclose an interior volume, and the inlet may be arranged to deliver feed liquid to the interior volume of the filter cage. The aperture of the filter cage may be coincident with the axis. Optionally, feed liquid may enter from the inlet via the centre of a hollow drive shaft. Where the drive shaft is hollow, the aperture of the filter cage may be concentric with the drive shaft and may optionally also be adjacent to the drive shaft.

In some embodiments, the filter cage may be open at one end, optionally, the open end may be the first end. The open end of the filter cage may be proximate to the inlet and aligned such that feed from the inlet enters the filter cage.

The filter cage may be substantially in the form of a cylinder, an ellipsoid or a prism. A filter cage substantially in the form of the aforementioned shapes may comprise a form that approximates to those shapes including any shape in between. A prism may be a polygonal prism wherein the polygon has a number of sides of 4 or more, e.g. 4 to 20 sides. The polygonal prism may be a regular polygonal prism. Where the filter cage is a cylinder, the filter cage comprises a single cylindrical side wall between two circular end walls. Where the filter cage comprises a polygonal prism, the number of sidewalls corresponds to the number of sides of the polygon, e.g. a hexagonal prism may comprise six rectangular side walls between two hexagonal end walls. The one or more filter media are preferably located in or on the one or more side walls of the of the filter cage. Preferably, the filter cage is cylindrical.

The filter cage may be rotationally symmetrical and may be balanced with respect to rotation. By balanced with respect to rotation it is preferably meant that the filter cage will not tend to shake or vibrate unduly when rotated e.g. when rotated at 100rpm or 1500rpm or 3000rpm.

The filter cage may have a length of at least 45mm, of at least 95 mm, of at least 145 mm, of at least 195 mm, of at least 295 mm, or of at least 395 mm. The filter cage length may not exceed 595 mm, 495 mm, 395 mm, 295 mm or 195 mm.

The filter cage may have a diameter of at least 20 mm, or of at least 30 mm, or of at least 40 mm, or of at least 50 mm, or of at least 60 mm. The filter cage diameter may not exceed 95 mm, or 75 mm, or 65 mm, or 58 mm, or 45 mm, or 35 mm.

The filter cage may comprise a detachable cap. The detachable cap may be located at the second end of the filter cage and may cover a portion of the second end of the filter cage, or it may cover the entirety of second end of the filter cage. A detachable cap may be any removable closure that prevents unfiltered feed liquid from leaving the filter cage when attached to the filter cage but is removable from the filter cage to permit access to the interior of the filter cage. The detachable cap may comprise connection means to retain the detachable cap on the filter cage. Non-limiting examples of connection means include but are not limited to: screw threads between the filter cage and the detachable cap; bayonet pins on one of the detachable cap and the filter cage and bayonet channels on the other; one or more latches on the detachable cap and/or on the filter cage; an interference fit between the filter cage and detachable cap; or one or more sliding pins on the detachable cap and/or on the filter cage. Optionally, the detachable cap may be removed from the filter cage when the filter cage remains in situ in the filter only. Alternatively, or in addition, the detachable cap may be removable from the filter cage after the filter cage has been removed from the filter chamber.

The detachable cap may comprise a mechanical coupling to the removable lid. The mechanical coupling may be any connection wherein the degree of freedom of movement between the detachable cap and the removable lid is reduced. In particular the mechanical coupling may restrict relative movement so that as the removable lid is moved in a particular direction (e.g. along the axis) the detachable cap is also moved in that particular direction. Optionally, removing the removable lid from the filter chamber may pull the filter cage out of the filter chamber via the detachable cap. This may further simplify user experience. Optionally, the detachable cap is not mechanically coupled to the removable lid.

The mechanical coupling may permit rotation between the detachable cap and removable lid. The coupling may permit one of the detachable cap or the removable lid to rotate relative to the other and rotation may be around the axis. The coupling may comprise a spindle. One or both of the detachable cap and removable lid may be rotatable about the spindle. Optionally the coupling may comprise one or more bearings or bushings between the spindle and the detachable cap and/or the removable lid. The spindle may be rigidly connected to one of the detachable cap or the removable lid. In one embodiment, the spindle may comprise a threaded capped bolt, the bolt connected to the detachable cap via a nut, and the capped end of the bolt connected to the removable lid via a bearing.

When the removable lid is in situ in a filter chamber and the detachable cap is in situ on a filter cage and in the filter chamber, the removable lid and detachable cap may be coaxially aligned on the axis or on an axis parallel thereto. That is, the axis passing through the centres of the detachable cap and removable lid may be parallel and coincident in this position. Optionally, the mechanical coupling may permit limited rotation out of the axis. That is, the detachable cap and removable lid may be moved relatively via the coupling so that the axis passing through the centres of the detachable cap and removable lid are no longer parallel. The coupling may comprise a biasing means to provide a restorative force so that the axis of the detachable cap and removable lid return to parallel.

The coupling may comprise a spherical bearing to permit limited rotation out of the axis. A spherical bearing may also provide relative rotation around the axis as describe above. Alternatively, the spindle may be flexible to permit out of axis rotation, the spindle may also provide a restorative force.

Where the filter cage is rotated by the drive shaft at the first end, the spindle may provide support for the second end to prevent the filter cage from rotating away from the axis.

The filter cage may be made from the engineering materials. The filter cage may be made from the same engineering materials as specified for the filter chamber above.

When the filter chamber is a cylinder, or approximates or comprises a cylinder as hereinbefore described, the filter cage may rotate about the axis which is aligned parallel to the side wall of the filter chamber and which is more preferably substantially central within the filter chamber when viewed from directly along the axis, e.g. the filter chamber side walls and the filter cage are concentric when viewed from directly along the axis.

The filter cage may undergo rotation. The filter cage may be rotated at a G force at the perimeter of the filter media of at least 2G, or at least 5G, or at least 20G, or at least 40G, or at least 100G or at least 175G, or at least 250G or at least 325G or at least 450G. The G force optionally may not exceed 10,000G, or 2000G, or 1000G, or 500G at the radially outermost part of the filter cage. For a filter cage of radius r (cm), rotating at R (revolutions per minute (rpm)) and taking g as the acceleration due to gravity at 9.81 m/s$^2$, then:

$$G = 1.118 \times 10^{-5} r R^2$$

The filter cage may have a number of revolutions per minute of at least 100, or at least 800, or at least 1000, or at least 1200, or at least 1400, or at least 1800, or at least 2000. The number of revolutions per minute of the filter media optionally may not exceed 10,000, or 5000, or 2500, or 2100.

Optionally, the filter cage may be removable from the filter chamber via the opening, and the filtered microparticles may be extracted from the filter chamber by the removal of the filter cage with the filtered microparticles therein. Optionally the filtered microparticles may be removable through the opening in a direction parallel with the axis.

Thus, the opening in the second end wall may be sized sufficiently large relative to the filter cage for the filter cage to pass through. The filter cage may be detachable from the filter unit to permit it to be removed from the filter chamber. Optionally the filter cage may be detachable from the drive shaft. Alternatively or in addition to, the interior of filter cage may be accessible by a user via the opening in the second end wall without the need to remove the filter cage.

## Filter media

In the present invention the wording used "a filter media" equally means "one or more filter media". The filter media may comprise a porous material. The pores of the filter media may have a mean pore size of no more than 100 $\mu$m, no more than 90 $\mu$m, no more than 80 $\mu$m, no more than 70 $\mu$m, no more than 60 $\mu$m, no more than 50 $\mu$m, no more than 40 $\mu$m, or no more than 30 $\mu$m. Such pore sizes have been found to provide excellent efficiency in the removal of microfibres whilst simultaneously not blocking too readily. In order of increasing preference, the pores in the one or more filter media have a mean pore size of at least 1 $\mu$m, at least 2 $\mu$m, at least 5 $\mu$m, at least 10 $\mu$m, at least 20 $\mu$m, or at least 30 $\mu$m. Typically, the filter media comprises pores with a mean pore size from 10 to 100 $\mu$m, or from 20 to 70 $\mu$m.

The mean pore size may be the arithmetic mean pore size. The pore size may be considered the largest linear size of the pore. In the case of a circular pore this would be a diameter. In the case of a pore taking the form of a slot this would be the length of the slot.

The mean is preferably established by optical or electron microscopy using suitable image analysis software. The mean is preferably the mean of at least 100, more preferably at least 1,000 and especially at least 10,000 pores.

The number of filter media present in the filter unit is preferably no more than 100, more preferably no more than 50, especially no more than 20 and most especially no more than 10. Preferred numbers of filter media include 1, 2, 3, 4, 6 and 8.

The filter media may comprise a mesh, a perforated sheet, woven or non-woven fibre sheet, cloth or felt, or porous material, or any other known filtration material. Where the filter media comprises a mesh, the mesh may comprise a network of wire or thread including a knitted mesh. The network of wire or thread may be a non-woven or woven or may comprise a plurality of fibrous layers. The fibrous layers may optionally comprise two or more layers of fibres aligned in parallel with each layer typically in different orientations. The pores of the mesh may be formed from the different spacings between the wire or thread.

Where the filter media comprises a perforated sheet, the pores may be the perforations. A perforated sheet may include a metallic or polymeric material where the material is, punched, punctured, cut, slit, or treated by any known method to introduce perforations into the material.

Where the filter media comprises a porous material, the porous material may be a porous ceramic, a laminar surface with pores (e.g. a porous polymer membrane) or any other material that is inherently porous.

The one or more filter media may be planar in shape, more preferably the one or more filter media are curved in shape, most preferably the one or more filter media are curved such that they adopt substantially the same shape as the side wall or side walls of the filter cage.

When one filter media is present in the filter cage, the filter media preferably is cylindrical in shape.

When a plurality of filter media is in the filter cage, the filter media preferably in combination act so as to form an approximate cylindrical shape when arranged in the filter cage.

## Drive Shaft

The drive shaft is configured to drive rotation of the filter cage, typically the drive shaft extends from the first end wall of the filter chamber to the filter cage. The drive shaft may pass through the first end wall of the filter chamber. A seal may be located between the drive shaft and the first end wall.

The drive shaft comprises a mechanical connection to a drive means. A mechanical connection to the drive means may comprise a pulley to connect via a belt to a drive means, a gear to connect to one or more gears of a drive means, a chain between two sprockets, or a direct connection to a drive means. The direct connection may be for example, the drive shaft being connected to or integrally formed with the rotor of the motor. The filter unit may comprise one or more rotary bearings or bushings between the filter chamber and the drive shaft. The filter unit may comprise one or more rotary bearings or bushings connecting to the drive shaft adjacent to the mechanical connection to drive means. In particular, the filter unit may comprise two rotary bearings or bushings connecting to the drive shaft either side of the mechanical connection to drive means.

Optionally, the drive shaft may be hollow. Feed liquid may pass though the centre of the hollow drive shaft. The drive shaft may pass through the first end wall, and the inlet may be within the hollow of the drive shaft, and within the first end wall. A hollow drive shaft may also extend to an aperture in the first end of the filter cage. A hollow drive shaft may permit supply of feed liquid into the interior of the filter cage via the aperture.

A hollow drive shaft may also connect to a feed liquid supply pipe to supply feed liquid to the centre of the hollow drive shaft. A seal may be present between the supply pipe and the drive shaft. A feed liquid supply pipe may connect to or comprise part of an outlet from the treatment machine. The feed liquid supply pipe may be static whilst the drive shaft is rotatable during operation. The connection between a feed liquid supply pipe and the drive shaft may be surrounded by a housing. One or more seals may be present between the drive shaft and the housing. The housing may contain any feed liquid leakage from between the feed liquid supply pipe and the drive shaft.

## Coupling

The drive shaft may be permanently connected to the filter cage. Alternatively, the drive shaft and filter cage may comprise a detachable coupling therebetween. A detachable coupling of the drive shaft to the filter cage may comprise any system that permits drive from the drive shaft to be transferred to the filter cage and permits separation of the drive shaft and filter cage. That is the filter cage may be detachable from the drive shaft. In particular, the drive shaft and the filter cage each comprise a mating surface, which permits the drive shaft to detachably connect to and drive rotation of the filter cage. That is, the drive shaft may comprise mating surface on the drive shaft (i.e. a drive shaft mating surface), and the filter cage may comprise a mating surface on the filter cage (i.e. a filter cage mating surface). The drive shaft mating surface and the filter cage mating surface may be configured to be detachable and to cooperate to transfer drive therebetween.

The mating surface on the drive shaft and the mating surface on the filter cage may comprise reciprocally shaped features, i.e. a profile or profiles on one or both mating surfaces and a corresponding reciprocally shaped recess or recesses on the other surface. Non-limiting examples of reciprocally shaped features may include splines and grooves, pins and slots, aligned teeth and radially aligned stepped faces, amongst others. Optionally, the mating surface on the drive shaft and/or the mating surface on the filter cage comprises one or more splines.

The mating surface on the drive shaft and the mating surface on the filter cage may be configured so that rotation is transferred when the drive shaft is rotated in one direction of rotation only. A non-limiting example of a reciprocally shaped feature may comprise plural stepped faces aligned parallel to the radial direction of the axis and inclines increasing around the circumferential direction to the tips of the stepped faces. This feature may transfer drive when rotated in a first direction via the stepped faces pushing against corresponding stepped faces of a reciprocal feature. In a second direction corresponding inclines may permit the features to slip past each other, e.g. to operate like a rotary ratchet.

The drive shaft may widen towards the drive shaft mating surface to provide a drive shaft head distinct from the rest of the drive shaft. The head may comprise or approximate to a cone, or other tapered shape that narrows toward the end. The head may comprise a shoulder or a flange or another widened portion. The drive shaft hear may provide a larger area to accommodate the mating surfaces.

**Drive Means**

The filter unit comprises a drive means. The drive means comprises an electric motor. The electric motor may comprise a rotor. The motor may be an annular motor, that is a motor with an opening through the centre of the rotor. The drive shaft may pass through the opening in the rotor and be connected to the rotor, so that the motor surrounds a portion of the drive shaft and is operable to rotate the drive shaft. Thus, the rotor of the motor may be concentric with the axis and drive shaft. Alternatively, the motor may be located remote from the axis, e.g. the rotor of the motor may rotate about an axis parallel to but not coincident with the axis of the filter chamber.

**Impellor**

The filter unit may comprise an impellor configured to rotate with the filter cage. The impellor rotates with the filter cage to rotate the feed liquid in the filter chamber. The impellor may assist in pumping or driving feed liquid through the filter unit and out of the outlet and/or may assist in pumping or driving the feed liquid through the one or more filter media. The impellor may comprise from 1 to 10, more preferably from 3 to 10 and especially 4, 5 or 6 impellor blades. The impellor blades may take any shape suitable for rotating feed liquid in the filter chamber. In particular, the impellor blades may comprise a face aligned in the radial direction from the axis so that when rotated, the face is pushed into the feed liquid to rotate it around the filter chamber. The impellor blades may be linear and may extend along the length of the filter cage and parallel to the axis, or they may be non-linear relative to the axis (for example, they may be helical around the axis).

The impellor blades may be radially inwards from the filter media (e.g. in the interior of the filter cage). The impellor blades may be radially outwards of the filter cage (e.g. on the exterior of the filter cage).

The impellor may be removable from the interior or exterior of the filter cage. Alternatively, the impellor may be attached to or be integrally formed with the filter cage. Where the impellor is removable, the impellor may comprise an assembly of multiple connected impellor blades. Thus, removal of the impellor removes all blades simultaneously. In particular, the impellor may comprise a plurality of evenly spaced linear blades interconnected with rigid radial or circumferential elements.

The impellor may be mechanically connected to the detachable cap of the filter cage or to the removable lid. Detaching and pulling the detachable cap, or optionally the removable lid away from the filter cage may withdraw the impellor from the filter cage. This may further improve the ease of removing the impellor.

In some embodiments, the impellor may only be removable from the filter cage whilst the filter cage remains in situ in the filter chamber. Alternatively, the impellor may be removable from the filter cage when the filter cage has been removed from the filter chamber. Optionally the impellor may be removable both when the filter cage is in situ in the filter chamber, and when the filter cage has been removed from the filter chamber.

**Extraction element**

The filter unit may comprise an extraction element to extract filtered microparticles out of the filter cage. The extraction element may comprise an element removable from the interior of filter cage to remove microparticles from the filter chamber through the opening in the second end wall. The extraction element may be adapted to be withdrawn in the axial direction out of the filter cage to remove microparticles from the filter chamber. The extraction element may comprise an elongate portion which extends approximately the length of the filter cage. The extraction element may also comprise a filter media contacting portion to contact the filter media. Contact of the contacting portion with the filter media may include direct contact or may include a small clearance therebetween, e.g. a clearance less than 2mm, or less than 1mm or less than 0.5 mm or less than 0.1mm therebetween. When in situ in the filter cage the filter media contacting portion may be attached to the end of the elongate portion and proximal to the first end of the filter cage. The filter media contacting portion may comprise one or more apertures to allow feed liquid from the inlet to pass through. When the extraction element is withdrawn from the filter cage, the filter media contacting portion may contact the filter media to collect any microparticles accumulated thereon. The collected microparticles may then be extracted from the filter chamber on the extraction element. The filter media contacting portion may comprise scraper elements to contact the filter media. Scraper elements may comprise rubber or another flexible material and may conform to the shape of the filter media. The one or more filter media are preferably rigid or are held rigidly in place in the filter cage.

The extraction element may only be removable from the filter cage whilst the filter cage remains in situ in the filter chamber. Alternatively, the extraction element may be removable from the filter cage when the filter cage has been removed from the filter chamber. Optionally the extraction element may be removable from the filter cage whilst the filter cage remains in situ in the filter chamber and when the filter cage has been removed from the filter chamber.

The extraction element may comprise a mechanical coupling to the detachable cap or to the removable lid. When the detachable cap or to the removable lid are detached/removed from the filter unit, the extraction element may also be simultaneously withdrawn from the filter cage via the mechanical coupling. This may further improve the ease of removing the extraction element. The extraction element may be attached to or integrated into the impellor. That is, the impellor may comprise a filter media contacting portion and may be operable as an extraction element.

### Air Bleed and Secondary Drain

When the outlet is located at the vertically lowermost part (i.e. the bottom) of the filter chamber, the maximum volume of filtered feed liquid can drain under gravity out of the outlet. Therefore, the filter unit can be fully drained of feed liquid after filtration in this configuration. However, air may accumulate at the top of the filter chamber as the filter chamber is filled with feed liquid. The filter unit may comprise an air bleed outlet at the vertically uppermost part of the filter chamber to remove the air. The air bleed outlet may comprise a valve operable to permit air to escape from the filter chamber when the filter chamber contains feed liquid. The valve may be opened during initial filling of the filter chamber with feed liquid or shortly thereafter. The valve may close after air has been bled from the filter chamber. The valve may comprise a float valve or any valve comprising a buoyant element to operate the valve. The valve may be closed upon detection of liquid by a liquid sensor or after a predetermined time, the valve may then remain closed throughout filtration. The air bleed outlet may be connected to the wastewater drain or to the outlet of the filter chamber, therefore any liquid passing through the air bleed outlet may be returned to a wastewater drain.

When the outlet is located at the vertically uppermost part (i.e. the top) of the filter chamber, air can exit the filter chamber via the outlet. However, after filtration a volume of filtered feed liquid may be retained in the filter unable to be drained out of the outlet via gravity. The filter chamber may further comprise a secondary drain outlet at the vertically lowermost part (i.e. bottom) of the filter chamber. The secondary drain outlet may be operable to drain retained filtered feed liquid from the filter chamber when supply of feed liquid has stopped. The secondary drain outlet may comprise a valve. The valve may remain closed during filtration and may be opened after filtration to drain retained filtered feed liquid. The secondary drain outlet may connect to the outlet of filter chamber or to a wastewater drain.

The vertically upper- or lower- most parts of the filter chamber may refer to the parts of the filter chamber when the filter unit is in use that are the topmost or bottommost regions of the filter chamber relative to the vertical direction. When the filter unit is in use, the filter unit will typically be orientated so that the axis aligned in the horizontal direction. The vertically uppermost part of the filter chamber may typically be the region in the filter chamber where air may accumulate and the vertically lowermost part of the filter chamber where water may accumulate first under the influence of gravity.

### Operation

The filter unit may be operable as a centrifugal filter or operable to use centrifugal force for filtering microparticles from a feed liquid containing microparticles. A filter unit operable as a centrifugal filter or operable to use centrifugal force for filtering microparticles may rotate the feed liquid to drive the feed liquid through the filter media. Optionally, rotation of the feed liquid may also pump the feed liquid through the filter unit.

In order of increasing preference, the filter unit may filter the feed liquid from at least 2, at least 5, at least 10, at least 15, at least 20, at least 30, at least 50 and at least 100 textile treatment cycles before requiring any emptying or cleaning. The necessity for cleaning can be established where the flow rate drops below 50% of its initial rate or more preferably where the abrupt reduction in the flow rate is noted.

Typically, microparticles may (only) be removed from the filter chamber when filtered feed liquid has been drained from the filter chamber. Optionally, microparticles may only be removed from the filter chamber when filter feed liquid has been drained to below the lowest point of the opening in the second end wall of the filter chamber.

The filter unit may be operable to extract filtered microparticles from the filter chamber when the filtered microparticles are in a dewatered state. A dewatered state may comprise a microparticle containing filter residue where the water content of the filter residue has been reduced from a suspension or surplus of water until the filter residue is in the non-flowable state. A non-flowable state may be considered to be a state where the filter residue has a high quantity of solids compared to liquid, i.e. the residue may resemble a slurry, paste-like or damp particulate material, or substantially dry particulate material. A high quantity of solids compared to liquid may be considered to be the filter residue comprising at least 50% by mass of solids, at least 75% by mass of solids or at least 90% by mass of solids, and optionally up to 98% by mass of solids, or up to 100% by mass of solids. Dewatered filter residue may optionally comprise filter residue where the water content has been reduced until the filter residue comprises a high quantity of solids compared to liquid as defined above. Dewatered microparticles may be removed from the filter chamber in the filter cage or on an extraction element.

The filter unit may be operable to dewater filtered microparticles using centrifugal force. That is, after filtration water may be drained from the filter chamber and the filter cage rotated to remove water from the filter residue containing microparticles. Rotation may continue until a dewatered state as defined above is achieved. Optionally, rotation to dewater the filtered microparticles may take place at a higher G force than rotation during filtration. Optionally a filter operable to dewater may comprise a filter cage rotatable at at least 1,000, or at least 1,200, or at least 1,400, or at least 1,800, or at least 2,000, or at least 5,000 or at least 10,000 revolutions per minute.

**Feed Liquid**

The feed liquid may be a liquid effluent from a textile treatment apparatus. Preferably, the feed liquid is not in the form of a paste, sludge or semi-solid. The feed liquid is preferably an aqueous liquid. When the feed liquid comprises liquids other than water these may be alcohols, ketones, ethers, cyclic amides and the like. Preferably, the feed liquid comprises at least 50wt%, more preferably at least 80wt% and most especially at least 90wt% of water.

The feed liquid comprises microparticles. The term "microparticles", as used herein may refer to any particulate material having a longest linear dimension of less than 1 mm, or less than 0.5 mm or less than 0.1 mm. Microparticles may have a longest linear dimension no less than 1 $\mu$m. The longest linear dimension can be measured by optical or electron microscopy with suitable image analysis software. The microparticles may be microparticles derived from textiles, in particular from fibres and filaments of textiles, and may in particular be microfibres.

The feed liquid may also comprise larger particles, e.g. particles with a dimension larger than 1mm. The term "solid material" used herein may refer to the microparticles and optionally the larger particles in a feed liquid.

The feed liquid may comprise less than 30 wt.%, or less than 20 wt.% or less than 10 wt.% of solid material prior to entry into the filter unit (as a percentage of the total mass of the solid material and the liquid). The feed liquid may comprise at least 0.001 wt.%, or at least 0.01 wt.%, or at least 0.1wt% of solid material (as a percentage of the total mass of the solid material and the liquid).

The feed liquid may comprise from about 0.01 wt.% to about 5 wt.% solid material, or from about 0.1 wt.% to about 3.5 wt.% solid material (as a percentage of the total mass of the solid material and the liquid).

The inlet of the filter unit may be connected to the outlet of a textile treatment apparatus. The feed liquid from the textile treatment apparatus may be an effluent feed. The words "effluent feed" preferably refers to the feed liquid originating from the effluent from a cycle of textile treatment apparatus e.g. a wash cycle.

Alternatively, the feed liquid may be a polishing feed of a textile treatment apparatus. By the words "polishing feed" we preferably mean the liquids present in the textile treatment apparatus during some portion of the textile treatment cycle. Typically, the polishing feed is recycled between the filter unit and the textile treatment apparatus.

**Microfibres**

The microparticles may be or may comprise microfibres. In particular, the filter unit of the first aspect may be able to filter microfibres from a feed liquid containing microfibres. The term "microfibres" as used herein preferably means microfibres having a longest linear dimension of less than 1 mm. Preferably, in order of increasing preference, the microfibres have a longest linear dimension of no more than 500 $\mu$m, no more than 250 $\mu$m, no more than 200 $\mu$m, no more than 150 $\mu$m, or no more than 100 $\mu$m.

The term microfibres can additionally or alternatively mean fibres having a diameter of less than ten micrometres.

The longest linear dimension and the diameter can be measured by optical or electron microscopy with suitable image analysis software. Preferably the longest linear dimension and/or the diameter of the microfibre is a mean. The mean is preferably an arithmetic mean. The arithmetic mean is preferably established from measuring at least 100, more preferably at least 1,000 and especially at least 10,000 microfibres.

Microfibres can be or comprise a synthetic material, a semi-synthetic material or a natural material or a blend thereof. Microfibres comprising a synthetic material include but are not limited to those that derive from polyamide, polyester and acrylic. Microfibres comprising natural material include but are not limited to those that derive from wool, cotton and silk, in particular, those that comprise cellulose.

**Efficiency, flow rate and Filtered Feed liquid**

Filtered feed liquid may refer to feed liquid that has passed through the filter media. The filtered feed liquid is feed liquid that has had a proportion of microparticles removed by filtration. As used herein, the term "efficiency" may refer to the percentage of microparticles by mass removed from the feed liquid.

The filter unit, textile treatment apparatus, methods and use disclosed herein are in order of increasing preference capable of removing at least 70%, at least 80%, at least 90%, at least 95% and at least 99% by dry mass relative to all the microparticles originally present in the feed liquid.

The efficiency can be established by filtering any feed liquid. The efficiency can be measured across a range of types of microparticles. Preferably, the efficiency is established by firstly capturing and measuring the dry weight all of the microparticles from any treatment cycle collected using a filter bag having a pore size of 1 micron. The dry mass $W_{totav}$ is usually an average. $W_{tot}$ is itself given by $W_{f1} - W_{i1}$ where $W_{f1}$ is the final dry weight of the 1 micron filter bag plus the dry microparticles collected and $W_{i1}$ is the dry weight of the initial filter bag prior to filtration. $W_{totav}$ is simply the average of the $W_{tot}$ values, typically the average of 3x $W_{tot}$ values.

In a similar way, secondly any small amounts of microparticles which have passed through the filter unit can be established by capturing and measuring the dry weight of microparticles in the feed liquid after it exits the filter unit and as collected on a 1 micron filter bag. This dry mass of microparticles having passed through the filter unit is $W_{nc}$ which is itself calculated by $W_{f2} - W_{i2}$ where $W_{f2}$ is the final dry weight of the 1 micron filter bag plus the dry microparticles collected and $W_{i2}$ is the dry weight of the initial filter bag prior to filtration.

The efficiency is then given by $(W_{totav}-W_{nc})/W_{totav}$ x 100.

Drying of the filter bag and the filtered microparticles is preferably performed at a temperature of 50 degrees Celsius for a period of a least 12 hours.

In order of increasing preference the flow rate of the feed through the filter unit is at least 1 litre/minute, at least 2 litres/minute, at least 3 litres/minute, at least 4 litres/minute, at least 5 litres/minute, at least 6 litres/minute, at least 7 litres/minute, at least 8 litres/minute, at least 9 litres/minute, at least 10 litres/minute, at least 15 litres/minute, at least 20 litres/minute, at least 25 litres/minute, at least 30 litres/minute, at least 35 litres/minute, or at least 40 litres/minute.

Typically, the flow rate will be no more than 1000 litres per minute, 500 litres per minute, 100 litres per minute or 50 litres per minute.

In order of increasing preference, the filter unit has a capacity of at least 100 ml, at least 250 ml, at least 500 ml, at least 750 ml, at least 1,000 ml or at least 2,000 ml.

Typically, the filter unit has a capacity of no more than 20,000 ml, no more than 10,000 ml, no more than 5,000 ml, no more than 3,000 ml, no more than 2,000 ml, or no more than 1,000 ml.

The capacity is typically measured by filling the filter chamber with water until full. This is typically done with water at a temperature of 20 degrees Celsius.

In order of increasing preference, the ratio of flow rate : capacity is at least 0.5:1, at least 1:1 at least 2:1, at least 3:1, at least 4:1, at least 5:1, at least 6:1, at least 7:1, at least 10:1, at least 15:1, at least 20:1, or at least 25:1 when the flow rate is expressed in litres/minute and the capacity is expressed in litres.

The ratio of flow rate: capacity is typically no more than 1000:1, more typically no more than 500:1, or no more than 100:1.

**Textile treatment Apparatus**

According to a second aspect, there is provided a textile treatment apparatus comprising:

    a housing comprising a front face accessible by a user and a door therein;

    a filter unit according to the first aspect located within the housing;

    a drum contained within the housing, the drum comprising an interior volume and an open end aligned with the door of the front face of the housing.

The textile treatment apparatus may be any apparatus suitable for treating textiles. In particular the textile treatment apparatus may be suitable for washing textiles. In particular the textiles may comprise natural fibres (e.g. cellulose containing fibres), synthetic fibres (e.g. polyester) or a combination or natural and synthetics fibres. The textiles may comprise woven fibres. In particular the textiles may comprise garments.

The textile treatment apparatus may be adapted for washing textiles with a treatment formulation comprising a liquid, the drum may be suitable for rotating the textiles and the treatment formulation. The textile treatment apparatus may comprise a drive unit for rotating the drum and a filter unit according to the first aspect. In particular, the textile treatment apparatus may be a washing machine.

The textile treatment apparatus may comprise a detergent drawer located in the front face of the housing. The detergent drawer may be moveable between a closed configuration and an open configuration. In the open configuration a user is able to add textile cleaning agent (for example, detergent). The filter unit may be located behind detergent drawer. The opening and removable lid at the second end wall of the filter unit may be accessible by a user through the detergent drawer when the detergent drawer is in the open configuration.

The detergent drawer may be mechanically connected to the removable lid. Opening of the detergent drawer may pull the removable lid away from the filter chamber. Similarly, closing the detergent drawer may also return the removable lid to close the filter chamber. In these embodiments, the filter cage or extraction element may be coupled to the detergent drawer via the removable lid. Therefore, as the detergent drawer is opened, microparticles may be extracted from the filter chamber, via the extraction element or filter cage depending on embodiment. Likewise, as the detergent drawer is closed, the extraction element or filter cage may be returned to the filter chamber and or the removable lid replaced in the opening.

Alternatively, the opening and removable lid may be directly accessible in the front face of the housing, such that it is accessible by a user, or the opening and removable lid may be covered by a flap or panel of the housing.

The inlet of the filter unit may be connected to the textile treatment machine so that the feed liquid is from a treatment cycle of the textile treatment apparatus. Where the textile treatment apparatus is a washing machine, the feed liquid may be effluent from a wash cycle.

The outlet of the filter unit may be connected to a drain of the textile treatment apparatus. The drain of the textile treatment apparatus may connect to a wastewater drain (e.g. a connection to a sewer system).

A textile treatment machine may include machines adapted for colouring (e.g. dyeing), stonewashing, abrading, and applying surface treatments to garments or textiles used in the production of garments. A textile treatment machine may have a capacity permitting no more than 15 Kg, or 25Kg, or 50Kg, or 100 Kg, or 500 Kg of dry textiles to be treated at any given time. The drum volume of a textile treatment machine may be up to 100L, 500L, 1000L or 5000L.

The textile treatment machine may be a washing machine, which may be a domestic washing machine or a commercial washing machine. A domestic washing machine may have a capacity permitting no more than 15 Kg of dry textiles to be washed at any given time. Typically, a domestic washing machine is either a front loading machine or a top loading washing machine. In a front loading washing machine or a top loading washing machine, the front face is the face comprising the door. Thus, in a top loading washing machine, the front face is the top face. Often domestic washing machines are about 60 cm wide, 60 cm deep and about 85 cm tall. The drum of a domestic washing machine preferably has a capacity of at least 1 litre and more preferably at least 10 litres and preferably no more than 150 litres, or no more than 120 litres.

A commercial washing machine may have a capacity greater than 15 Kg of dry textiles to be washed at any given time. The drum of the textile treatment apparatus may have a capacity of more than 120 litres, more than 150 litres more than 200 litres, more than 400 litres, more than 900 litres or more than 1400 litres. Drums of such larger dimensions are especially suitable for commercial or industrial applications. The drum may have any upper limit to its capacity, preferably the drum has a capacity of no more than 20,000 litres or no more than 10,000 litres.

The textile treatment apparatus may also comprise a drive unit. The drive unit is operable to rotate the drum of the textile treatment apparatus. The drive unit for rotating the drum may be a motor and preferably an electric motor.

The liquid in the treatment formulation may be as described for the feed liquid above. The liquid may comprise one or more treatment additives selected from dyes, pigments, surfactants, enzymes, acids, bases, buffering agents, oxidizing agents, builders, biocides, and anti-staining agents.

The textile treatment apparatus is preferably electrically connected to the filter unit according to the first aspect. The textile treatment apparatus may comprise a controller unit which is preferably connected to the filter unit according to the first aspect.

A controller in the textile treatment apparatus may comprise a memory loaded with a programme which when operated by a processor operates the drive means connected to or comprised as part of the filter unit. Similarly, one or more valves may be operated by the controller. The operated valves may be valves associated with the inlet, the outlet, the secondary drain outlet, or the air bleed outlet (i.e. the air bleed valve). In this way, operation of the filter unit may be under the direct control of the textile treatment apparatus.

Alternatively, or additionally, the filter unit may comprise a controller. The controller in the filter unit may sense or be sent information relating to the actions of the controller in the textile treatment apparatus and the controller of the filter unit has a memory loaded with a programme which when operated by a processor controls the drive means connected to or comprised as part of the filter unit and/or valves associated with the filter unit. In this way the filter unit is not under the direct control of the textile treatment apparatus but instead it "has knowledge" of what the textile treatment apparatus is doing and can respond accordingly. As an example, the controller in the filter unit may sense that the waste valve in the textile treatment apparatus has been opened and/or that a waste pump has been activated and it may then respond by powering the drive means of the filter unit and/or operating air bleed valves so as to begin filtration with the filter unit. The memory of the controller may be comprised as part of the filter unit or may be accessible via wireless communication.

The filter unit and/or textile treatment apparatus may comprise sensors (for example, pressure or liquid sensors in the drain outlet of the textile treatment apparatus or in the filter chamber and/or sensors to determine the volume of effluent passed to the filter unit). The controller of the filter unit or the textile treatment apparatus may be configured to automatically operate the filter unit based on an input from such sensors. Alternatively, or in addition to, the controller of the filter unit or the textile treatment apparatus may be configured to operate the filter unit after a condition pertaining to a wash cycle is identified (e.g. completion of a wash cycle).

The textile treatment apparatus may comprise: a tub in which the drum is rotatably mounted, the drum having side walls and said side walls comprising one or more apertures configured to permit said treatment formulation to exit the drum; a collector is located beneath said drum and optionally in or underneath the tub, the collector configured to collect said treatment formulation that exits the drum; a filter unit as disclosed herein; and a first flow pathway between the collector and the inlet of the filter unit.

The outlet of the filter unit may be fluidly connected to the drum. In this way, liquid that has passed through the filter unit may be returned to the drum. The outlet of the filter unit may be fluidly connected to a drain. Optionally, the outlet of the filter unit may be fluidly connected to a drain and to the drum. Optionally, the textile treatment apparatus comprises a control valve configured such that liquid filtrate that exits the outlet of the filter unit is selectively recirculated to the drum or sent to a drain.

The textile treatment apparatus may further comprise a recirculation means for recirculating the treatment formulation from said collector to said drum, wherein the filter unit is comprised in the recirculation means. In this way, the filter unit filters treatment formulation during its recirculation from the collector to the drum. Typically, the recirculation means comprises a pump and ducting which connects the collector and the drum.

The textile treatment apparatus may comprise a second filter which is not according to the first aspect of the present invention or a trap positioned such that treatment formulation passes through the second filter prior to entering the inlet of the filter unit. The second filter or trap may be a coarse filter (e.g. a coin trap) to prevent large pieces or items of solid material from entering the filter, for example, coins, stones, or other items from pockets when washing laundry.

## Use

According to a third aspect, there is provided a use of the filter unit of the first aspect or the textile treatment apparatus of the second aspect for filtering microparticles from a feed liquid.

The use of the textile treatment apparatus according to the third aspect may comprise the treatment of textiles. In particular, the textile may comprise the treatment of synthetic contain textiles and/or cellulose containing textiles such as cotton or polycotton. The textile treatment apparatus may be as described under the second aspect.

The use may be performed according to the method of the fourth aspect.

## Method

According to a fourth aspect, there is provided a method of filtering microparticles from a feed liquid containing microparticles, the method comprising:

providing a filter unit according to the first aspect,

supplying the feed liquid containing microparticles through the inlet at the first end wall;

rotating the drive shaft to rotate the filter cage;

passing filtered feed liquid out of the outlet; and

stopping the drive unit and supply of feed liquid to the inlet.

The method may comprise dewatering the filtered microparticles by operating the drive unit to rotate the filter cage after stopping the supply of feed liquid.

The method may comprise extracting filtered microparticles from the filter chamber via the opening at the second end wall.

Optionally, extracting may comprise removing the filter cage with filtered microparticles contained thereon through the opening in the second end wall.

Optionally, extracting may comprise removing the filter cage with filtered microparticles contained thereon through the opening in the second end wall and removing an extraction element from the filter cage. Optionally, extracting may comprise removing the extraction element from the filter cage and the filter chamber through the opening in the second end wall.

Optionally, the feed liquid may be supplied from a textile treatment apparatus. The textile treatment apparatus may optionally be any textile treatment apparatus according to the second aspect. Further, the feed liquid may be any feed liquid as described under the first or second aspects. In particular, the textile treatment apparatus of the method may be a washing machine. The filter unit may be contained within a housing of the textile treatment apparatus. The housing may comprise a front face with a detergent drawer located therein, the detergent drawer moveable between an open and a closed configuration, and wherein the filter unit is located behind the detergent drawer.

Optionally, the textile treatment apparatus may be treating one or more cellulose containing garments. Thus, the feed liquid may comprise cellulose microfibres and effluent from the treatment. Typically, the microparticles are or comprise microfibres.

Optionally, extraction may comprise first moving the detergent drawer to an open configuration.

The step of supplying feed liquid containing microparticles through the inlet may comprise first priming the filter chamber by filling the filter chamber with feed liquid. Priming may comprise operating a pump of a treatment machine to pump feed liquid into the filter unit. Priming may comprise operating an air bleed outlet to remove air from the filter chamber. Optionally, after the chamber has been primed the drive shaft may be rotated to begin filtration.

Optionally, after stopping the rotation of the filter cage and supply of feed liquid to the inlet, a valve to a secondary drain outlet may be opened to drain any residual filtered feed liquid from the filter chamber.

Stopping the supply of feed liquid to the inlet may comprise closing a valve upstream of the filter unit or may comprise stopping operation of a pump supplying feed liquid to the inlet.

Stopping rotation of the filter cage may comprise stopping operation of a drive unit.

Dewatering may comprise rotating the filter cage to centrifugally remove water from the microparticles on the one or more filter media. Rotation for dewatering may optionally be performed at a higher G force than rotation during filtration.

The supply of feed liquid to the inlet may be from a single treatment cycle of the textile treatment apparatus. The feed liquid from a single treatment cycle may be delivered in one continuous stream, or the supply of feed liquid from a single treatment cycle may be supplied intermittently.

The method of the fourth aspect may be especially suited to filtering microparticles which are or comprise microfibres. In particular microfibres as defined under the first and second aspects.

The microparticles filtered in the method of the fourth aspect may originate from a textile which has been treated in a liquid medium.

The treatments performed by the textile treatment apparatus may include washing, colouring (especially dyeing and pigmenting), abrading, ageing, softening, rinsing, bleaching, sterilising, desizing and depilling and combinations thereof. The method is especially suited to filtering a feed liquid that is an effluent which originates from a textile treatment apparatus as previously mentioned. Preferably, the textile treatment apparatus is used to rotate (especially tumble) one or more textiles and a liquid medium in a drum. At least some of the fibres in the effluent may comprise synthetic fibres. Examples of synthetic fibres include nylon, polyester, polyurethane, acrylic, acrylonitrile and the like.

The feed liquid may be at a temperature of from 5 to 95°C, more preferably from 5 to 70°C and especially from 10 to 60°C as it passes through the filter unit.

In order of increasing preference, the filter unit according to the first aspect or the textile treatment apparatus according to the second aspect is able to filter effluent feeds from at least 2, 3, 4, 5, 10, 20, 30, 50 and 100 treatment cycles prior to becoming blocked or requiring cleaning.

In order of increasing preference, the filter unit according to the first aspect or the textile treatment apparatus according to the second aspect is able to filter feeds whose total volume is at least 10, 50, 100, 500, 1000, 5000 and 10,000 litres prior to becoming blocked or requiring cleaning.

The filter unit may be operated such that the effluent flows through the filter unit once (and only once). This method or operation is relatively fast. The filter unit may alternatively be operated such that the feed of one treatment cycle is cycled through the filter unit one or more times. This method of operation can provide especially good efficiencies of filtration although the filtering times required may be longer. Preferably, the feed is cycled through the filter unit at least 1, 2, 3, 4 and 5 times. Preferably, the feed liquid is cycled through the filter unit no more than 100 times. The number of cycles of filtration of a feed liquid may be calculated as the total volume of liquid passed through the filter unit in a treatment cycle divided by the volume of fresh liquid used in the treatment cycle. For example, if 20 litres of fresh liquid are used in a wash cycle, and 40 litres passes through the filter unit, the filter unit has filtered two cycles.

It will be appreciated that the features, preferences, and embodiments described hereinabove may be applicable where combinations allow, to each of the figures. The aspects of the present disclosure are further described with reference to the following figures.

**Summary of the Figures**

Figure 1 shows cross sectional schematic side view of a filter unit according to the present disclosure.

Figure 2a shows an isometric diagram of an alternative filter unit according to the present disclosure.

Figure 2b shows a cross sectional diagram of the filter unit of figure 2a.

Figure 2c shows an isometric diagram of the filter unit of figures 2a and 2b with the filter cage removed from the filter chamber.

Figure 2d shows an isometric diagram of the filter unit of figure 2c with the impellor removed from the filter cage.

Figure 2e shows an isometric diagram of a drive shaft of the filter unit of figures 2a to 2d.

Figure 2f shows an isometric diagram of the drive shaft of figure 2e with a filter cage of the filter unit of figures 2a to 2d.

Figure 2g shows an isometric diagram of the filter cage of the filter unit of figures 2a to 2d without the impellor and filter media.

Figure 2h shows an isometric diagram of the impellor of the filter unit of figures 2a to 2d.

Figure 2i shows an isometric diagram of the filter unit of figures 2a to 2d in a detergent drawer with the detergent drawer in a closed configuration.

Figure 2j shows an isometric diagram of the filter unit of figures 2a to 2d in a detergent drawer with the detergent drawer in an open configuration.

Figure 3 shows a cross sectional schematic of an alternative filter unit according to the present disclosure.

Figure 4 shows a cross sectional schematic of an alternative filter unit according to the present disclosure.

**Detailed Description**

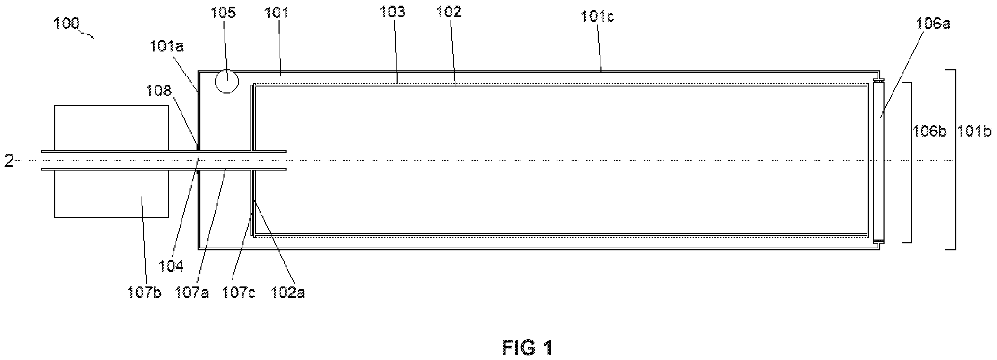

With reference to figure 1, a filter unit 100 is shown. The filter unit 100 is for filtering microparticles from a feed liquid containing microparticles. The filter unit 100 comprises a filter chamber 101. The filter chamber 101 is a hollow structure and it extends along an axis 2. The filter chamber 101 comprises a first end wall 101a and a second end wall 101b which are opposed to each other and are coincident with axis 2. In figure 1, the first and second end walls have a side wall 101c therebetween, in this embodiment the side wall is a cylindrical wall and in combination with the first and second end walls 101a and 101b, gives the filter chamber 101 the approximate shape of a cylinder. However, the filter chamber may take other forms as described herein. A filter cage 102 is located within the filter chamber 101. The filter cage 102 is arranged to rotate around the axis 2. The filter cage 102 is a rigid structure that supports a porous filter media 103. The filter media 103 filters microparticles from the feed liquid as the feed liquid passes through the filter media. In this embodiment, the filter media surrounds the cylindrical wall of the filter cage 102. However, other configurations are also envisioned.

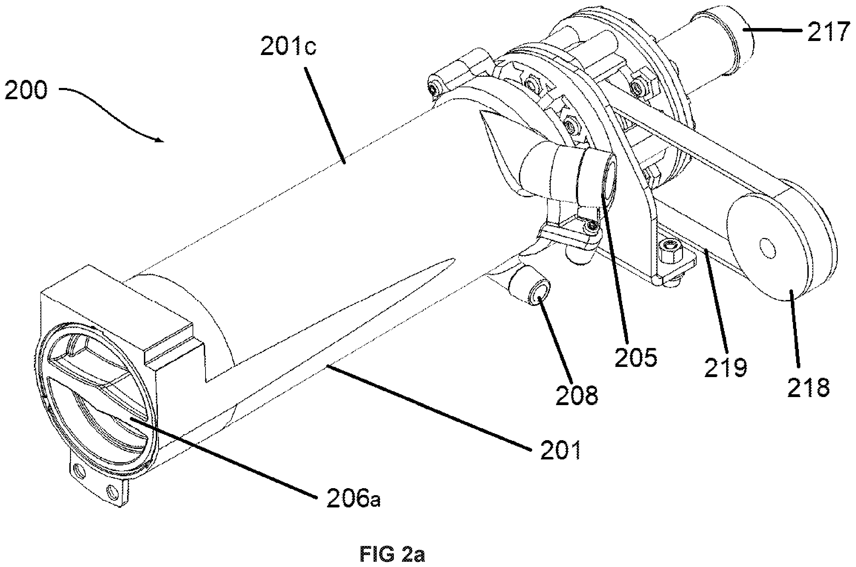

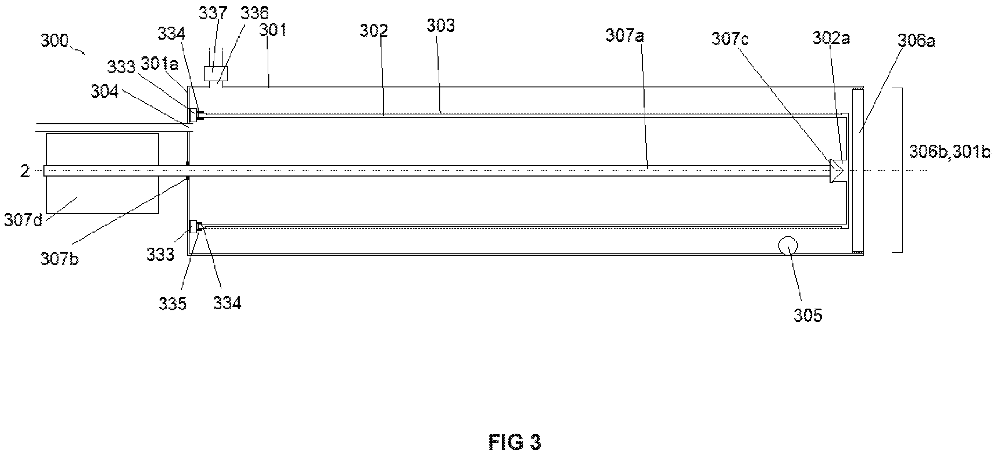

An inlet 104 is comprised in the first end wall 101a of the filter chamber 101. The inlet 104 permits entry of feed liquid into the filter chamber 101 for it to be filtered by the filter media 103. An outlet 105 is also comprised in the filter chamber 101. The outlet 105 permits filtered feed liquid to exit the filter chamber 101. In the embodiment shown in figure 1, the outlet 105 is shown at a topmost portion of the filter chamber and at a tangent to the sidewall. However other configurations of the outlet are also envisioned, including but not limited to the outlet configurations shown in figure 2a and figure 3.

The filter unit 100 also comprises a drive shaft 107a. The drive shaft 107a extends from the first end wall 101a to the filter cage 102. In the embodiment shown in figure 1, the drive shaft 107a also extends through the first end wall 101a and the defines the inlet 104 within the first end wall 101a. In the embodiment shown in figure 1, the drive shaft 107a extends through the sealed bearing 108. The drive shaft 107a is arranged to cooperate with the filter cage 102 in the filter chamber 101 so that rotation of the drive shaft 107a drives rotation of the filter cage 102.

The drive shaft 107a may comprise a non-permanent connection to the filter cage 102. However permanent connections are also within the scope of the present disclosure. In the embodiment shown in figure 1, the non-permanent connection takes the form of two cooperating mating surfaces 107c, 102a. The drive shaft 107a comprises a drive shaft mating surface 107c and the filter cage 102 comprises a filter cage mating surface 102a. These two surfaces cooperate so that torque applied to the drive shaft 107a is transferred to the filter cage 102. The cooperating mating surfaces 107c, 102a may comprise splines, interlocking elements and friction surfaces amongst others.

The drive shaft 107a may be rotated by an annular motor 107b as shown in figure 1. However other embodiments are within the scope of the disclosure, for example, driven by belts gears or a non-annular motor.

In the embodiment shown in figure 1, the drive shaft 107a is hollow and also functions to supply feed liquid into the filter chamber 101 and the interior of the filter cage 102. However, other arrangements are within the scope of the disclosure, including a solid drive shaft and a separate inlet. In the embodiment shown in figure 1, the filter cage 102 also comprises an opening at the end adjacent to the first wall to receive the drive shaft 107a therethrough so that feed is delivered into the filter cage 102.

The second end wall 101b of the filter chamber 101 comprises an opening 106b. The opening 106b can be closed into a first configuration by removable lid 106a so that liquid cannot pass through the opening 106b. The removable lid 106a can be removed from the opening 106b into a second configuration so that filtered microparticles can be extracted from the filter chamber 101. In the embodiment shown in figure 1, the removable lid 106a secures with screw threads into the opening 106b in the second end wall 101b of the filter chamber 101.

In use, the removable lid 106a is placed in the opening 106b (i.e. the first configuration). Feed liquid is supplied to the filter chamber 101 via the inlet 104. The drive shaft 107a is rotated so that the filter cage 102 rotates and the feed liquid passes through the filter media and out of the filter chamber 101 via outlet 105. Supply of feed liquid is stopped, and residual filtered feed liquid allowed to drain from the outlet 105. Optionally the filtered microparticles accumulated on the filter media 103 may be dewatered by further rotation of the filter cage 102. After dewatering, rotation of the filter cage 102 is stopped. The removable lid 106a is removed from the opening 106b (i.e. the second configuration). Filtered microparticles are removed from the filter chamber 101 through the opening 106b in the second end wall 101b. In the embodiment shown in figure 1, the filter cage 102 is configured to be removed from the filter chamber 101 through the opening 106b. Microparticles are thus removed through the opening 106b via the filter cage 102.

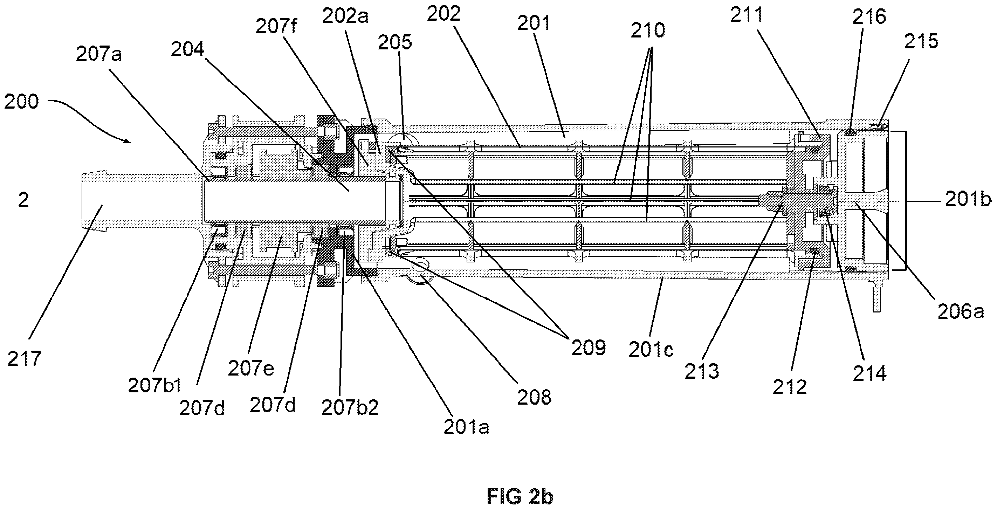

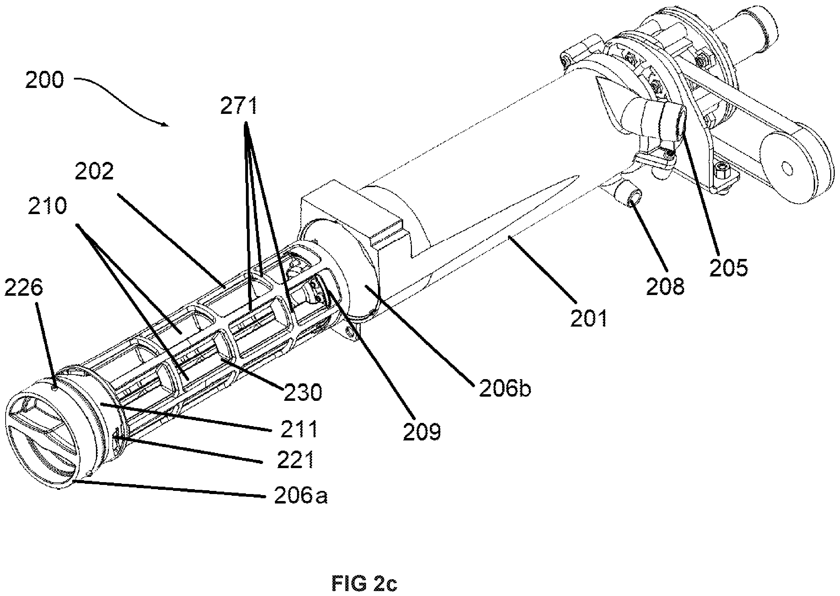

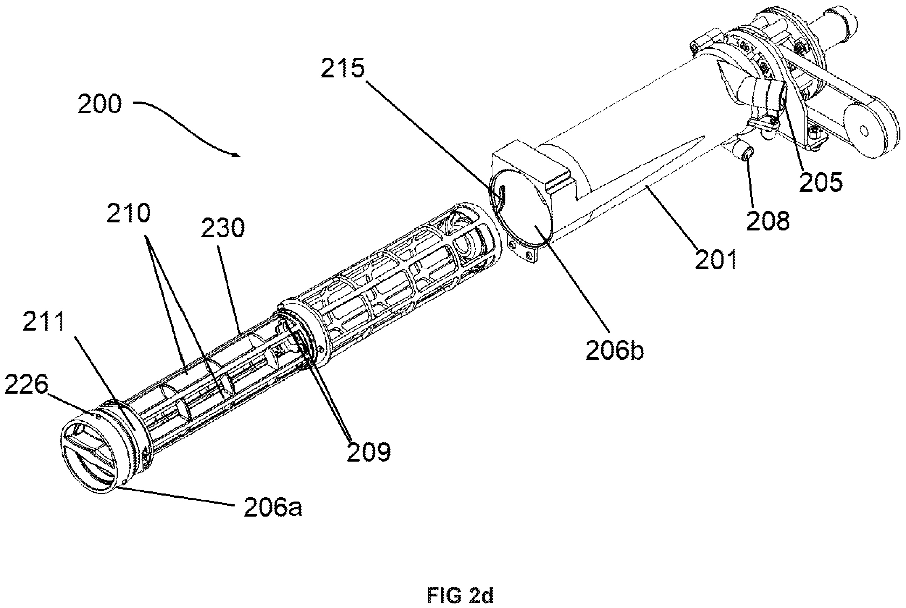

With reference to figures 2a to 2d, an alternative filter unit 200 is shown. Filter unit 200 is for filtering microparticles from a feed liquid containing microparticles. Referring to figure 2a, the filter unit 200 is shown in an isometric view. In figure 2b, a cross sectional view through the centre of the filter unit 200 is shown. In figure 2c, the filter unit 200 is shown in an isometric view with a filter cage removed from the filter chamber. In figure 2d, the filter unit 200 is shown in an isometric view with a filter cage removed from the filter chamber and the impellor removed from the filter cage.

The filter unit 200 comprises a filter chamber 201 which approximates to a hollow cylinder. The filter chamber 201 comprises a first end wall 201a and a second end wall 201b (illustrated in figure 2b) which are opposed to each other and coincident with axis 2 passing through the centre of the filter chamber 201. A cylindrical side wall 201c of the filter chamber 201 extends between the first and second end walls. The filter chamber 201 widens slightly from the first end wall 201a to the second end wall 201b.

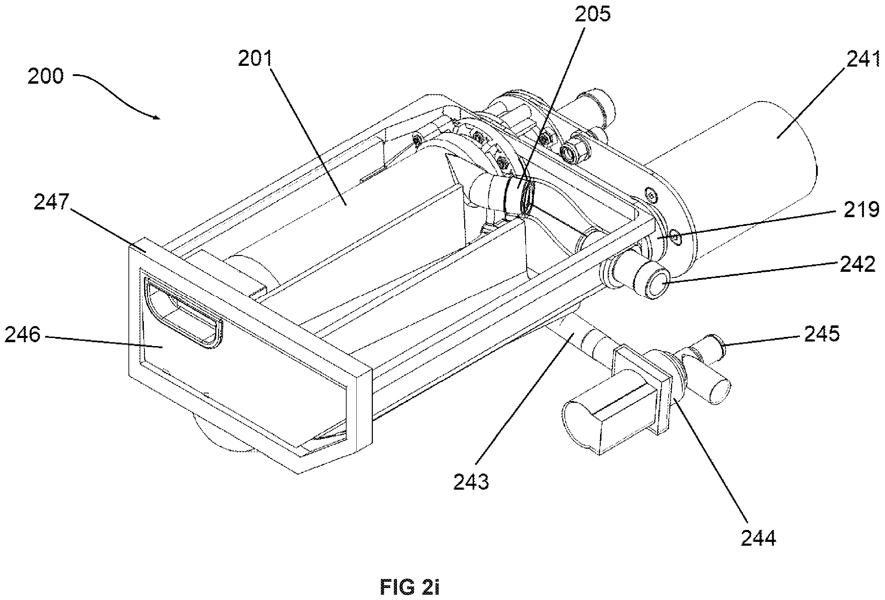

The inlet 204 permits entry of feed liquid into the filter chamber 201 and specifically into the filter cage 202. The inlet 204 is an opening in the first end wall 201a of the filter chamber 201. As explained below the drive shaft 207a passes through the inlet 204. An outlet 205 is also comprised in the cylindrical side wall 201c of the filter chamber 201 in an elevated position at a vertically uppermost part of the chamber. The outlet 205 permits filtered feed liquid to exit the filter chamber 201. With the outlet 205 in an elevated position, air bubbles in the feed liquid can exit from the filter chamber 201. However, this means a residual volume of liquid may be retained in the filter chamber 201 beneath the level of the outlet 205. The filter unit 200 also comprises a secondary drain outlet 208 in a bottom portion of the cylindrical side wall 201c to drain any residual liquid from the filter chamber 201. The secondary outlet may also comprise a valve 244 (shown in figure 2i only) operable to drain residual liquid.

The second end wall 201b is comprised entirely of an opening 206b and a removable lid 206a. In filter unit 200 the opening 206b and removable lid 206a occupies all of the second end wall 201b. The removable lid 206a comprises three bayonet pins 226 which fit in bayonet channels 215 in the second end wall 201b of the filter chamber 201 as shown in figure 2d. The bayonet channels 215 are sized so that the removable lid 206a is rotated through an angle between 30 and 90 degrees (i.e. between 1/12 to ¼ turn) to secure it in the second end wall 201b or release it therefrom. The bayonet channels 215 are angled towards the first end wall 101a so that rotation of the removable lid 206a when closing moves the removable lid 206a towards the first end wall 201a. By moving the removable lid 206a towards the first end wall 101a the removable lid 206a may be used to push against the filter cage 202 to secure it in position against drive shaft 207a. The removable lid 206a also comprises an O-ring seal 216 as shown in figure 2b to prevent liquid from escaping around the removable lid 206a. When the removable lid 206a is removed from the filter chamber 201, an opening is presented in the second end wall 201b that is sufficiently large to extract the filter cage 202 through.

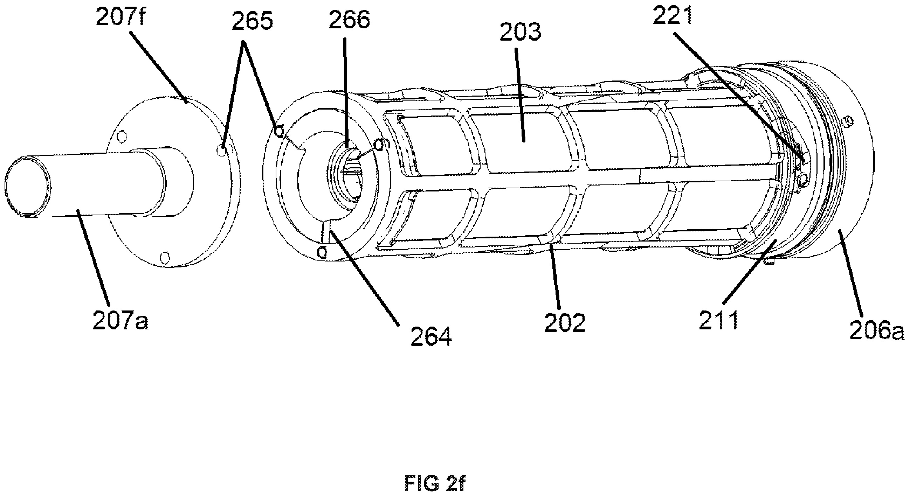

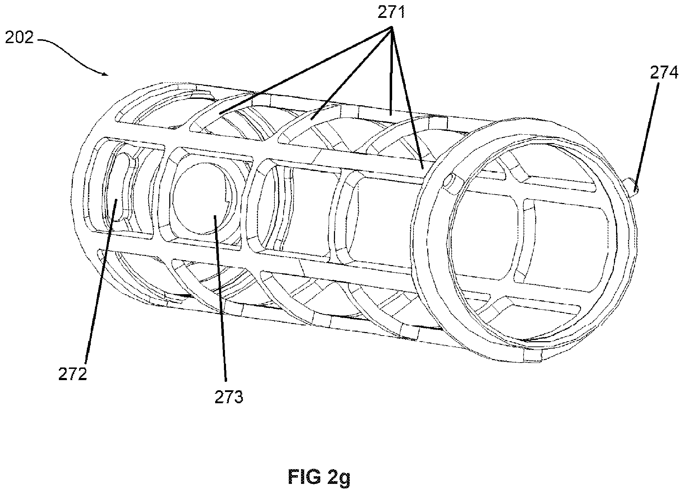

In Figure 2b a filter cage 202 is shown located within the filter chamber 201. In figure 2c the filter cage 202 is shown removed from the filter chamber 201. The filter cage 202 is also shown in detail in figures 2f and 2g. The filter cage comprises a first end 202a, which when the cage is in situ in the filter chamber, is located adjacent the first end wall 201a of the filter chamber 201. The filter cage 202 is formed with a rigid lattice structure 271 and porous filter media 203 are secured to the internal surface of the lattice structure. The lattice structure 271 of the filter cage 202 approximates to a cylinder, when the porous filter media 203 are secured to the lattice the porous filter media 203 also approximate to a cylinder. The porous filter media 203 are shown in figure 2f and are omitted from the other figures for clarity. The porous filter media 203 filter microparticles from the feed liquid as the feed liquid passes through the filter media 203. The porous filter media 203 may comprise a comprise a mesh, a perforated sheet, woven or non-woven fibre sheet, cloth or felt, or other porous material. The filter cage 202 comprises an aperture 273 at the first end. The aperture allows feed liquid from the centre of the drive shaft 207a to enter the interior of the filter chamber 201. An O-ring seal 266 may be positioned against the perimeter of the opening on the exterior side of the filter cage 202 as shown in figure 2f. This may prevent feed liquid from leaking between the filter cage and the head 207f of the drive shaft 207a.

The filter cage 202 comprises a detachable cap 211 which prevents unfiltered feed liquid from bypassing the filter media 203. The detachable cap 211 is located at the second end of the filter cage 202 (i.e. the end closest to the second end wall 201b of the filter chamber 201 when the filter cage 202 is in situ in the filter chamber 201). The detachable cap 211 can be removed by a user and comprises channels 221 which interact with bayonet pins 274 on the filter cage 202. Rotation of the channels onto the pins locks the detachable cap 211 against the filter cage 202. The bayonet channels 221 may be sized so that the detachable cap 211 is rotated through an angle between 30 and 90 degrees (i.e. between 1/12 to ¼ turn) to lock it in place. The bayonet channels 221 may also be angled such that rotating the detachable cap 211 pulls the cap against the filter cage 202 locking it into place. An O-ring seal 212 may be present between the detachable cap 211 and the filter cage 202, in figure 2b this is shown attached to the detachable cap 211.

The detachable cap 211 of the filter cage 202 is connected to the removable lid 206a. The connection between the detachable cap 211 and the removable lid 206a comprises a spindle 213 that permits free relative rotation between the detachable cap 211 and the removable lid 206a. The spindle permits the detachable cap 211 or the removable lid 206a to be freely rotated relative to the other. This improves the ease of locating the bayonet pins 274, 226 into the relevant channels 221, 215. The spindle 213 also functions as a supporting axle to support rotation of the filter cage 202 in the filter chamber 201. The spindle 213 in filter unit 200 is joined to the removable lid 206a via a spherical bearing 214 which permits relative rotation around axis 2 between the removable lid 206a and the detachable cap 211. The spherical bearing 214 also allows off axis movement between the spindle and the removable lid 206a. This may improve the control a user has when trying to locate the bayonet pins 274, 226 of the detachable cap 211 or removable lid 206a into their respective channels 221, 215. By connecting the detachable cap 211 of the filter cage 202 to the removable lid 206a, removal of the removable lid away from the filter unit 200 causes the filter cage 202 to be pulled out of the filter chamber 201 via the opening 206b.

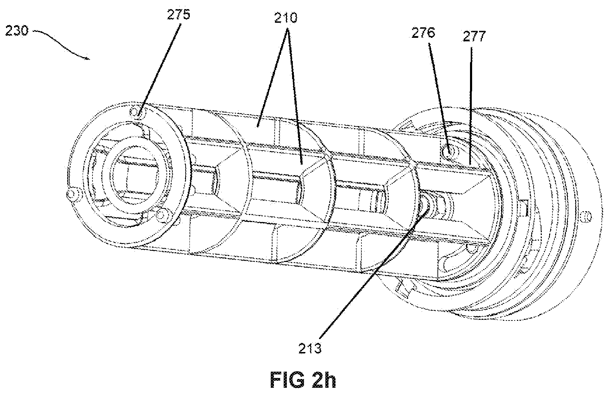

The filter unit 200 comprises an impellor 230 which is contained within the filter cage 202 and is removable therefrom. Figure 2b shows the impellor (not labelled in figure 2b) in the filter chamber 201 and filter cage 202, figure 2d shows the impellor 230 removed from the filter chamber 201, and figure 2h shows the impellor in isolation). The impellor comprises a plurality of impellor blades 210 which are equally spaced around the circumference of the impellor 230, the blades comprise faces aligned in the radial direction from the axis 2. The impellor 230 also comprises three drive pins 275 which fit into slots 272 in the first end of the filter cage 202 as shown in figure 2g. The drive pins 275 ensure the impellor 230 rotates with the filter cage 202. The slots 272 on the filter cage each extend through an arc of approximately 30°, this increases the freedom the user has in aligning the drive pins 275 with the slots 272.

Referring to figures 2c and 2d, the impellor 230 comprises scraper elements 209 around one end of the impellor 230. The scraper elements 209 contact the filter media 203 so that when the impellor 230 is pulled out of the filter cage 202 the scraper elements 209 are pulled against the filter media 203 removing any filtered microparticles accumulated thereon.

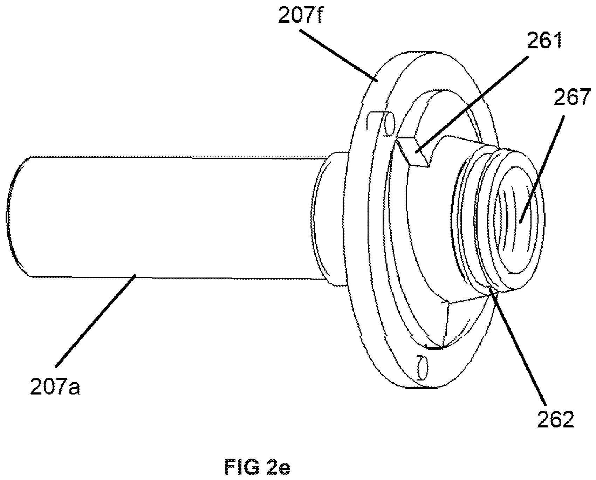

The filter unit 200 comprises a drive shaft 207a shown in detail in figure 2e. The drive shaft extends through the first end wall 201a of the filter chamber 201. The drive shaft 207a comprises a hollow centre. The hollow centre supplies feed liquid into the filter chamber 201 and into the interior of filter cage 202. The drive shaft 207a passes through the first end wall 201a and defines the inlet 204 within the drive shaft 207a and first end wall 201a. Rotation of the drive shaft 207a causes rotation of the filter cage 202.

The drive shaft 207a comprises a mating surface configured to cooperate with an equivalent mating surface on the filter cage 202 (see figure 2e). The mating surface of the drive shaft 207a in the embodiment shown in figure 2e takes the form of a head 207f which approximates in shape to a flange with a central conical projection. The head 207f comprises a stepped structure 261 which corresponds with an equivalent stepped structure 264 on the filter cage 202 shown in detail in figure 2f. The stepped structure 261 comprises three radially aligned faces so that when the drive shaft 207a is rotated in one direction drive is transferred via the faces of the stepped structure 261 to corresponding faces on stepped structure 264 to rotate the filter cage 202. Relative rotation between the filter cage 202 and the drive shaft 207a is permitted by the stepped structures 261, 264 which may permit improved ease of locating the filter cage against the head 207f of the drive shaft 207a. Additionally the filter cage and head 207f may comprise magnets 265 to help retain the cage against the head and to give the user tactile feedback when the filter cage 202 is located in position.

The drive shaft 207a also comprises a recess 262 which may accommodate an O-ring seal to prevent feed liquid leakage from between the coupling between the filter cage 202 and the drive shaft 207a.

At the other end of the drive shaft 207a from the mating surface, the drive shaft connects to a feed liquid supply pipe 217 which is shown in figures 2a and 2b as a spigot connectable to an outlet from a washing machine. The feed supply pipe delivers feed liquid into the interior of the drive shaft 207a. The drive shaft 207a is mounted on two sets of rotary bearings 207d. One seal 207b1 protects the bearings from fluid escaping from between the feed liquid supply pipe 217 and the drive shaft 207a, a second seal 207b2 prevents fluid escaping from between the drive shaft 207a and the first wall 201a.

The drive shaft 207a is driven by the drive means. The drive means comprises a pulley 207e fixed to the drive shaft 207a (see fig 2b) and mounted between bearings 207d. The pulley 207e is rotated by a belt 219 which also extends arounds a motor pulley 218 (see fig 2a). The motor pulley is driven by a motor 241 (shown only in figure 2i for clarity).

In use, the impellor 230 is placed inside the filter cage 202 with the detachable cap 211 sealed against the filter cage 202. The filter cage 202 is placed inside the filter chamber 201 and the removable lid 206a sealed in the opening 206b in the second end wall 201b of the filter chamber 201; i.e. the first configuration so that liquid cannot pass through the removable lid 206a. In this position removable lid 206a is biased into the filter chamber which in turn biases the filter cage 202 against the drive shaft 207a so that the stepped structure 264 of the filter cage 202 is biased against the stepped structure 261 of the drive shaft 207a. In this configuration rotation of the drive shaft causes rotation of the impellor 230, the filter cage 202 and the detachable cap 211. In this configuration the filter unit is sealed, and liquid can only enter and leave the filter chamber via the inlet 204, the outlet 205 or the secondary drain outlet 208.

Feed liquid is supplied to the feed supply pipe 217 which in turn supplies feed liquid to the interior of the drive shaft 207a. The feed liquid passes through the drive shaft 207a and through aperture 273 at the first end of the filter cage 202. The feed liquid enters the filter cage 202 where it must pass through the filter media 203 on the filter cage 202. The motor 241 is operated to drive rotation of the drive shaft 207a via belt 219 and pulleys 218, 207e. Rotation of the drive shaft 207a is transferred to the filter cage 202 via stepped structures 261, 264. Rotation of the filter cage 202 is also transferred to the impellor via drive pins 275 and slots 272. Rotation of the impellor 230 and detachable cap 211 of the filter cage 202 is supported by spindle 213 which rotates inside spherical bearing 214. The impellor blades 210 cause the feed liquid to rotate inside the filter chamber 201 establishing a pressure gradient and causing feed liquid to flow through the filter chamber 201 and out of the outlet via the filter media 203. As feed liquid passes through the filter media 203 microparticles are filtered out of the feed liquid and are retained inside the filter cage 202. At the end of filtration, supply of the feed liquid and operation of motor 241 is stopped. Any filtered fluid retained in the filter chamber 201 may be drained out of the secondary drain outlet 208 upon opening of valve 244.

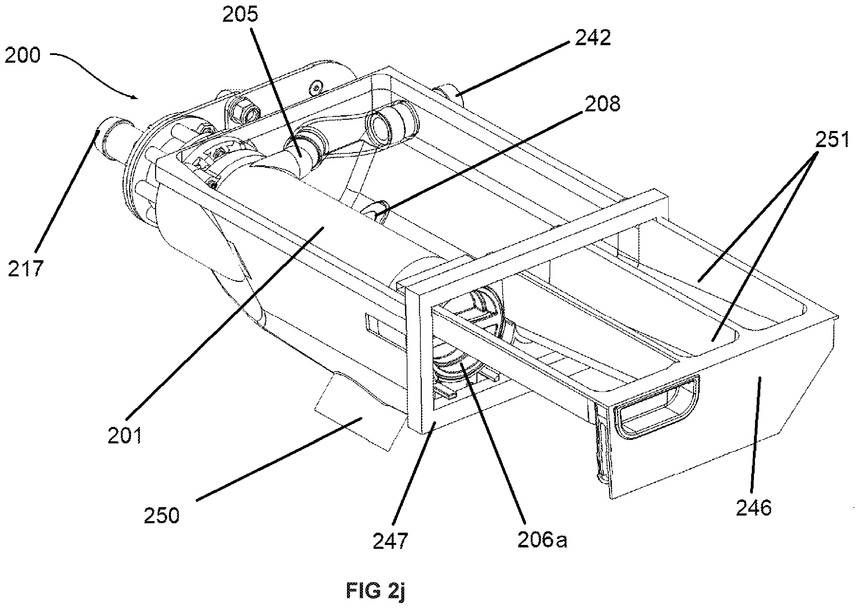

Referring to figures 2i and 2j, filter unit 200 is shown in relation to a detergent drawer of a washing machine. The detergent drawer comprises a detergent tray 246, the detergent tray comprises slots 251 into which laundry cleaning agents may be placed. The detergent tray 246 sits inside and is slidable within a drawer housing 247. The detergent housing 247 also comprises a detergent outlet 250 where laundry cleaning agents exit the detergent drawer before being consumed in the washing machine. In figure 2i the detergent drawer is shown in a closed configuration where the filter unit 200 is concealed by the front of the detergent tray 246. Figure 2i also shows the filter unit outlet 205 connected to an extension hose 242 which passes out of the drawer housing 247 to be connected to a wastewater drain (not shown). The secondary drain outlet 208 is also shown connected to hose 243 which in turn is connected to a valve 244 and finally to drain spigot 245 which connects to a wastewater drain (not shown) and/or to the extension hose 242. In this configuration the removable lid 206a is inaccessible and obscured by the detergent tray 246. In figure 2j the detergent drawer is shown **in** an open configuration with the detergent tray 246 withdrawn from the drawer housing 247 so that the removable lid 206a is accessible by a user.

The filter unit 200 may be emptied after one or more iterations of filtration. The filter unit 200 is emptied by opening the detergent drawer 246 and removing the removable lid 206a from the second end wall 201b of the filter chamber 201; i.e. the second configuration. The removable lid 206a can be removed by turning the removable lid 206a until the bayonets pins 226 of the removable lid 206a exit the bayonet channels 215 of the filter chamber 201. The filter cage 202 is connected to the removable lid 206a via spindle 213 and detachable cap 211. The filter cage 202 contains the filtered microparticles and can therefore be removed from the filter chamber 201 through the opening 206b in the second end wall 201b as shown in figure 2c. The detachable cap 211 can then be removed from the filter cage 202 by rotating until the bayonet pins 274 of the detachable cap 211 exit the bayonet channels 221 of the filter cage 202. The impellor 230 is connected to the detachable cap 211, pulling the detachable cap 211 relative to the filter cage 202 pulls the impellor 230 out of the filter cage 202. The scraper elements 209 on the impellor are pulled across the filter media 203 as the impellor 230 is pulled out of the filter cage 202. Filtered microparticles accumulated on the interior of the filter media 203 are transferred to the scraper elements 209 and are removed from the filter cage 202. The filtered microparticles can be removed from the scraper elements 209 by the user. The filter unit 200 can then be reassembled in reverse, by placing the impellor 230 in the filter cage 202 and replacing the detachable cap 211, followed by returning the filter cage 202 to the filter chamber 201 and replacing the removable lid 206a. The filter unit 200 is then ready to resume filtration.

Referring to figure 3 an alternative filter unit 300 is shown. The filter unit 300 is for filtering microparticles from a feed liquid containing microparticles. The filter unit 300 comprises a filter chamber 301. The filter chamber 301 is a hollow structure and it extends along an axis 2. The filter chamber 301 comprises a first end wall 301a and a second end wall 301b which are opposed to each other and are coincident with axis 2. In figure 3, the first and second end walls have a side wall therebetween, in this embodiment the side wall is a cylindrical wall and in combination with the first and second end walls 301a and 301b, gives the filter chamber 301 the approximate shape of a cylinder. A filter cage 302 is located within the filter chamber 301. The filter cage 302 is arranged to rotate around the axis 2. A sealed annular thrust bearing 333 is located on the first end wall of the filter chamber 301. The filter cage comprises an open end with a rigid lip that detachably connects to the thrust bearing. Two annular lip seals 334, 335 are attached to the annular thrust bearing 333 to receive the filter cage 302 therebetween. The lip seals 334, 335 function not only to prevent fluid escape between the annular bearing and the filter cage 302 but also to retain the edge of the filter cage 302 in position. Magnets (e.g. molybdenum magnets) may also be present on the surface of the annular thrust bearing 333 and the filter cage 302 to further retain the filter cage 302 against the annular thrust bearing 333.

The filter cage 302 comprises porous filter media 303, the porous filter media filters microparticles from the feed liquid as the feed liquid passes through the filter media 303.

An inlet 304 is comprised in the first end wall 301a of the filter chamber 301 and is radially outward from axis 2. The inlet 304 permits entry of feed liquid into the filter chamber 301 for it to be filtered by the filter media 303. An outlet 305 is also comprised in the filter chamber 301. The outlet 305 permits filtered feed liquid to exit the filter chamber 301. The outlet 305 is positioned at a vertically lowermost position in the filter chamber to minimise fluid retained in the filter chamber 301. The filter chamber 301 also comprises an air bleed outlet 336 and valve 337.

The filter unit 300 also comprises a drive shaft 307a. The drive shaft 307a extends through the first end wall 301a, and in the embodiment shown in figure 3, through the sealed bearing 307b along the entire length of the filter cage 302. The drive shaft 307a connects to the filter cage 302 in the filter chamber 301 so that rotation of the drive shaft 307a drives rotation of the filter cage 302.

The drive shaft 307a may comprise a non-permanent connection to the filter cage 302. In the embodiment shown in figure 3, the non-permanent connection may take the form of two cooperating mating surfaces. The drive shaft 307a comprises mating surface 307c and the filter cage 302 comprises a mating surface 302a. These two surfaces may cooperate so that torque applied to the drive shaft 307a is transferred to the filter cage 302. The cooperating mating surfaces 307c, 302a may comprise splines, interlocking elements, and friction surfaces amongst others. The drive shaft 307a may be rotated by annular motor 307d as shown in figure 3. However other embodiments are within the scope of the disclosure, for example, driven by belts gears or a non-annular motor. In the embodiment shown in figure 3, the drive shaft 307a is solid.

The second end wall 301b of the filter chamber 301 consists entirely of an opening 306b and a removable lid 306a. The opening 306b can be closed into a first configuration by the removable lid 306a so that feed liquid or filtered feed liquid cannot pass through. The opening 306b can be opened to a second configuration by removing the removable lid 306a so that filtered microparticles can be extracted from the filter chamber 301 through the opening 306b. In the embodiment shown in figure 3, the removable lid 306a secures with screw threads into the opening 306b of the filter chamber 301.

In use, the removable lid 306a is placed over the opening 306b. Feed liquid is supplied to the filter chamber 301 and into the interior of the filter cage 302 via the inlet 304. The valve 337 is opened to release any air out the filter chamber via the air bleed outlet 336. Once air is removed, valve 337 is closed. The drive shaft 307a is rotated so that the filter cage 302 rotates to pass liquid through the filter unit 300. Supply of feed liquid is stopped, and residual filtered feed liquid is allowed to drain from the outlet 305. Optionally the filtered microparticles accumulated on the filter media 303 may be dewatered by continued rotation the filter cage 302. The removable lid 306a may be removed from the opening 306b (i.e. the second configuration). Filtered microparticles may be removed from the filter chamber 301 through the opening 306b by extracting the filter cage out of the filter chamber 301. In the embodiment shown in figure 3, the filter cage 302 is configured to be removed from the filter chamber 301 through the opening 306b when in the second configuration. Microparticles can thus be removed through the opening 306b via the filter cage 302. The filter cage 302 may be emptied of microparticles by the user from the open end and replaced back into the filter chamber 301, placing the lip of the open end of the filter cage 302 between the annular lip seals 334, 335 and against the annular thrust bearing 333.

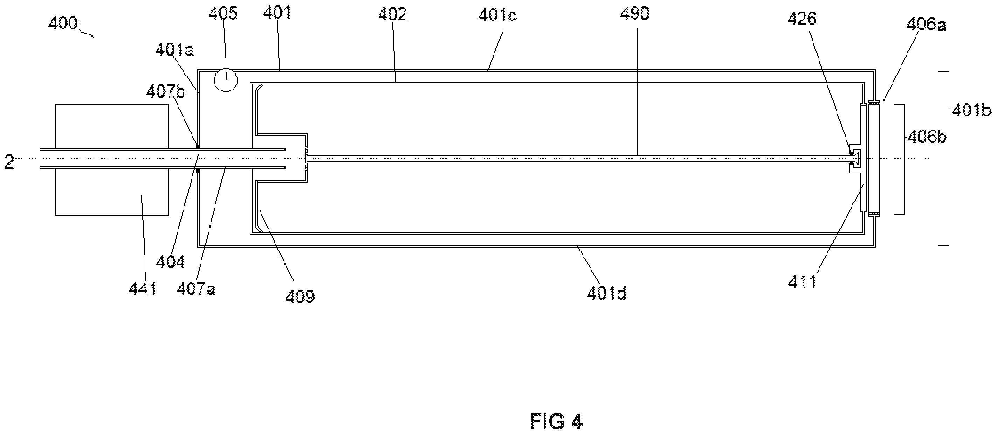

Referring to figure 4 an alternative filter unit 400 is shown. The filter unit 400 is for filtering microparticles from a feed liquid containing microparticles. The filter unit 400 comprises a filter chamber 401. The filter chamber 401 is a hollow structure and it extends along an axis 2. The filter chamber 401 comprises a first end wall 401a and a second end wall 401b which are opposed to each other and are coincident with axis 2. In figure 4, the first and second end walls have four side walls extending therebetween (two of which are 401c and 401d shown in figure 4) to give an overall cuboidal shape to the filter chamber. A filter cage 402 is located within the filter chamber 401. The filter cage 402 is arranged to rotate around the axis 2. The filter cage 402 comprises porous filter media, the porous filter media filter microparticles from the feed liquid as the feed liquid passes through the filter media.

An inlet 404 is comprised in the first end wall 401a of the filter chamber 401. The inlet 404 permits entry of feed liquid into the filter chamber 401 for it to be filtered by the filter media. An outlet 405 is also comprised in the filter chamber 401. The outlet 405 permits filtered feed liquid to exit the filter chamber 401.

The filter unit 400 also comprises a drive shaft 407a. The drive shaft 407a extends through the first end wall 401a, and in the embodiment shown in figure 4, through the sealed bearing 407b. The drive shaft 407a is permanently connected to the filter cage 402 so that rotation of the drive shaft 407a drives rotation of the filter cage 402.

The drive shaft 407a is rotated by annular motor 441 as shown in figure 4. The annular motor is contained in a watertight sealed casing. However other embodiments are within the scope of the disclosure, for example, driven by belts gears or a non-annular motor.

The drive shaft 407a is hollow and extends through the first end wall 401a into the filter chamber 401 and the interior of the filter cage 402. The drive shaft 407a in the first end wall 401a defines the inlet 404.

The second end wall 401b of the filter chamber 401 comprises an opening 406b and a removable lid 406a. The opening 406b can be closed by the removable lid 406a into a first configuration so that feed liquid or filtered feed liquid cannot pass through the opening 406b. The opening 406b can be opened to a second configuration by removing the removable lid 406a so that filtered microparticles can be extracted from the filter chamber 401. In the embodiment shown in figure 4, the removable lid 406a secures with screw threads into the opening 406b in the second end wall 401b of the filter chamber 401.

The filter cage 402 comprises a detachable cap 411 at the second end (the end of the filter cage 402 closest to the second end wall 401b when in situ in the filter chamber 202). The second end is connected via a bearing 426 to an extraction element 490. When in situ in the filter cage 402, the extraction element 490 extends from adjacent to the detachable cap 411 to the first end of the filter cage 402 (the first end of the filter cage 402 is the end of the filter cage 402 adjacent to the first end of the filter chamber 401a when in situ in the filter chamber 401). The extraction element 490 comprises a scraper element 409 of a suitable dimension to contact the filter media on the filter cage 402.

In use, the removable lid 406a is placed in the opening 406b. Feed liquid is supplied to the filter chamber 401 via the inlet 404. The drive shaft 407a is rotated by motor 441 so that the filter cage 402 rotates. Feed liquid passes through the filter media and out of the outlet 405. Supply of feed liquid is stopped, and residual filtered feed liquid allowed to drain from the outlet 405. Optionally the filtered microparticles accumulated on the filter media may be dewatered by continued rotation the filter cage 402. Once rotation of the filter cage 402 has stopped, the removable lid 406a is then removed from the opening 406b. The filter cage 402 remains in situ in the filter chamber 401. The detachable cap 411 is then accessible in the filter chamber 401 can be removed from the filter cage 402 in situ in the filter chamber 401. Removing the detachable cap 411 draws the scraper element 409 the extraction element 490 along the filter media. Filtered microparticles are transferred to the scraper element 409 and removed from the filter chamber 401 through the opening 406b in the second end wall 401b.

**Claims**

1. A filter unit (100, 200, 300, 400) for filtering microparticles from a feed liquid containing microparticles, the filter unit (100, 200, 300, 400) comprising:

   a filter chamber (101, 201, 301, 401) extending along an axis (2), and comprising opposing first end and second end walls (101a, 201a, 301a, 401a, 101b, 201b, 301b, 401b) and at least one sidewall (101c, 201c, 401c, 401d) extending therebetween, wherein both first and second end walls (101a, 201a, 301a, 401a, 101b, 201b, 301b, 401b) are coincident with the axis (2),
   a filter cage (102, 202, 302, 402) contained within the filter chamber (101, 201, 301, 401) and configured to rotate about the axis (2), the filter cage (102, 202, 302, 402) comprising one or more than one filter media (103, 203, 303) for filtering microparticles from the feed liquid;
   an inlet (104, 204, 304, 404) configured to pass feed liquid through the first end wall (101a, 201a, 301a, 401a) into the filter chamber (101, 201, 301, 401);
   an outlet (105, 205, 305, 405) in the filter chamber (101, 201, 301, 401) for passage of filtered liquid out of the filter chamber (101, 201, 301, 401);
   a drive shaft (107a, 207a, 307a, 407a) configured to drive rotation of the filter cage (102, 202, 302, 402), the drive shaft (107a, 207a, 307a, 407a) extending from the first end wall (101a, 201a, 301a, 401a) of the filter chamber (101, 201, 301, 401) to the filter cage (102, 202, 302, 402);
   wherein the second end wall (101b, 201b, 301b, 401b) is or comprises an opening (106b, 206b, 306b, 406b) therein and a removable lid (106a, 206a, 306a, 406a), in a first configuration the opening (106b, 206b, 306b, 406b) is closed by the removable lid (106a, 206a, 306a, 406a) so that feed liquid cannot pass through the opening (106b, 206b, 306b, 406b), in a second configuration the lid (106a, 206a, 306a, 406a) is removed from the opening (106b, 206b, 306b, 406b) so that filtered microparticles are extractable from the filter chamber (101, 201, 301, 401) through the opening (106b, 206b, 306b, 406b); and
   wherein the drive shaft (107a, 207a, 307a, 407a) comprises a mechanical connection to a drive means, and said drive means is an electric motor.

2. A filter unit (100, 200, 300, 400) according to claim 1, wherein the filter unit (100, 200, 300, 400) is operable to extract filtered microparticles from the filter chamber (101, 201, 301, 401) when the filtered microparticles are in a dewatered state;
and/or
wherein the filter cage (102, 202, 302, 402) is removable from the filter chamber (101, 201, 301, 401) via the opening (106b, 206b, 306b, 406b), and the filtered microparticles are extracted from the filter chamber (101, 201, 301, 401) by the removing the filter cage (102, 202, 302, 402) with the filtered microparticles thereon, optionally the filtered microparticles are removable through the opening (106b, 206b, 306b, 406b) in a direction parallel with the axis (2).

3. A filter unit (100, 200, 300, 400) according to any preceding claim, wherein the inlet (104, 204, 304, 404) is coaxial with the axis (2);
and/or

wherein the drive shaft (107a, 207a, 307a, 407a) is hollow, and the drive shaft (107a, 207a, 307a, 407a) passes through the inlet (104, 204, 304, 404);
and/or
wherein the filter cage (102, 202, 302, 402) is substantially a cylinder, ellipsoid or a prism and wherein the filter cage (102, 202, 302, 402) extends parallel to the axis (2);
and/or
wherein the filter cage (102, 202, 302, 402) encloses an interior volume, and the inlet (104, 204, 304, 404) is arranged to deliver feed liquid to the interior volume of the filter cage (102, 202, 302, 402).

4. A filter unit (100, 200, 300, 400) according to any preceding claim, wherein the drive shaft (107a, 207a, 307a, 407a) and the filter cage (102, 202, 302, 402) each comprise a mating surface (102a, 302a, 107c, 307c), which permits the drive shaft (107a, 207a, 307a, 407a) to detachably connect to and drive rotation of the filter cage (102, 202, 302, 402); optionally wherein the mating surface (107c, 307c) of the drive shaft (107a, 207a, 307a, 407a) and/or the mating surface (102a, 302a) of the filter cage (102, 202, 302, 402) comprises one or more splines.

5. A filter unit (100, 200, 300, 400) according to any preceding claim, wherein the filter cage (102, 202, 302, 402) comprises a detachable cap (211, 411), optionally the detachable cap (211, 411) is adjacent to the second end wall (101b, 201b, 301b, 401b) when the filter cage (102, 202, 302, 402) is in the filter chamber (101, 201, 301, 401).

6. A filter unit according to claim 5, wherein the detachable cap (211, 411) comprises a mechanical coupling to the removable lid (106a, 206a, 306a, 406a), optionally the mechanical coupling permits rotation between the detachable cap (211, 411) and removable lid (106a, 206a, 306a, 406a).

7. A filter unit (100, 200, 300, 400) according to any preceding claim, comprising an impellor (230) configured to rotate with the filter cage (102, 202, 302, 402).

8. A filter unit according to claim 7, wherein the impellor (230) is removable from the interior or exterior of the filter cage (102, 202, 302, 402), optionally wherein the impellor (230) is mechanically connected to the removable lid (106a, 206a, 306a, 406a) or to the detachable cap (211, 411) when dependent on claim 5.

9. A filter unit (100, 200, 300, 400) according to any previous claim, wherein the filter unit (100, 200, 300, 400) comprises an extraction element (490) to extract filtered microparticles out of the filter cage (102, 202, 302, 402), optionally wherein the extraction element (490) is configured to be withdrawn in the axial direction out of the filter cage (102, 202, 302, 402), further optionally wherein the extraction element (490) comprises a mechanical coupling to the removable lid (106a, 206a, 306a, 406a) or to the detachable cap (211, 411) when dependent on claim 5.

10. A filter unit according to claim 9 when dependent on claim 7, wherein the extraction element (490) is attached or integrated to the impellor (230).

11. A filter unit (100, 200, 300, 400) according to any preceding claim, wherein the filter chamber (101, 201, 301, 401) further comprises an air bleed outlet (336) at the vertically uppermost part of the filter chamber (101, 201, 301, 401); or a secondary drain outlet (208) at the vertically lowermost part of the filter chamber (101, 201, 301, 401) when the filter unit (100, 200, 300, 400) is in use;
and/or

wherein the filter unit (100, 200, 300, 400) is operable as a centrifugal filter for filtering microparticles from a feed liquid containing microparticles;
and/or
wherein the filter unit (100, 200, 300, 400) is operable to dewater filtered microparticles using centrifugal force;
and/or
wherein in use, the filter unit (100, 200, 300, 400) is oriented such that the axis (2) is parallel to the horizontal plane.

12. A filter unit (100, 200, 300, 400) according to any previous claim, wherein the filter media (103, 203, 303) comprises pores with a mean pore size from 10 to 100 $\mu$m, or from 20 to 70 $\mu$m;
and/or
wherein the filter chamber (101, 201, 301, 401) is cylindrical and comprises a cylindrical wall extending between the first end wall (101a, 201a, 301a, 401a) and the second end wall (101b, 201b, 301b, 401b), optionally wherein the outlet (105, 205, 305, 405) is in the cylindrical wall, optionally where the outlet (105, 205, 305, 405) is tangential to the cylindrical wall.

13. A textile treatment apparatus comprising:

a housing comprising a front face accessible by a user and a door therein;
a filter unit (100, 200, 300, 400) according to any preceding claim located within the housing;
a drum contained within the housing, the drum comprising an interior volume and an open end aligned with the door of the front face of the housing.

14. A textile treatment apparatus according to claim 13, wherein the textile treatment apparatus comprises a detergent drawer located in the front face of the housing, the detergent drawer moveable between a closed configuration and an open configuration, and wherein the filter unit (100, 200, 300, 400) is located behind the detergent drawer, optionally wherein the opening (106b, 206b, 306b, 406b) and removable lid (106a, 206a, 306a, 406a) at the second end wall (101b, 201b, 301b, 401b) of the filter chamber (101, 201, 301, 401) are accessible by a user through detergent drawer when the detergent drawer is in an open configuration;
or
wherein the opening (106b, 206b, 306b, 406b) and removable lid (106a, 206a, 306a, 406a) are in the front face of the housing or the opening (106b, 206b, 306b, 406b) and removable lid (106a, 206a, 306a, 406a) are covered by a flap or panel of the housing.

15. A textile treatment apparatus according to claim 13 or 14, wherein the textile treatment apparatus is a washing machine.

16. A textile treatment apparatus according to any of claims 13 to 15, wherein the feed liquid is from the textile treatment apparatus.

17. A textile treatment apparatus according to claim 13 or claim 16, wherein the outlet (105, 205, 305, 405) of the filter unit (100, 200, 300, 400) is connected to a drain of the textile treatment apparatus.

18. The use of a filter unit (100, 200, 300, 400) or a textile treatment apparatus according to any previous claim for filtering microparticles from a feed liquid.

19. A method of filtering microparticles from a feed liquid containing microparticles, the method comprising:

providing a filter unit (100, 200, 300, 400) according to any of claims 1 to 12,
supplying the feed liquid containing microparticles through the inlet (104, 204, 304, 404) at the first end wall (101a, 201a, 301a, 401a);
rotating the drive unit to rotate the filter cage (102, 202, 302, 402);
passing filtered feed liquid out of the outlet (105, 205, 305, 405); and
stopping the drive unit and supply of feed liquid to the inlet (104, 204, 304, 404).

20. A method of filtering microparticles according to claim 19, comprising dewatering the filtered microparticles by operating the drive unit to rotate the filter cage (102, 202, 302, 402) after stopping the supply of feed liquid;
and/or
further comprising extracting filtered microparticles from the filter chamber (101, 201, 301, 401) via the opening (106b, 206b, 306b, 406b), wherein extracting optionally comprises removing the filter cage (102, 202, 302, 402) with filtered microparticles contained thereon through the opening (106b, 206b, 306b, 406b), and, when dependent on claim 9 or 10, wherein extracting further optionally comprises removing the filter cage (102, 202, 302, 402) with filtered microparticles contained thereon through the opening (106b, 206b, 306b, 406b) and removing the extraction element (490) from the filter cage (102, 202, 302, 402).

21. A method of filtering microparticles according to claim 19 or 20, wherein the feed liquid is supplied from a textile treatment apparatus; optionally wherein the textile treatment apparatus is a washing machine;
and/or
wherein the textile treatment apparatus is treating one or more cellulose containing garments.

22. A method of filtering microparticles according to any of claims 19 to 21, wherein the filter unit (100, 200, 300, 400) is contained within a housing of the textile treatment apparatus, optionally wherein the housing comprises a front face with a detergent drawer located therein, the detergent drawer moveable between an open and a closed configuration, and wherein the filter unit (100, 200, 300, 400) is located behind the detergent drawer, further optionally wherein extraction comprises first moving the detergent drawer to an open configuration;

and/or
wherein the microparticles are or comprise microfibres.

## Patentansprüche

1. Filtereinheit (100, 200, 300, 400) zum Filtern von Mikropartikeln aus einer Mikropartikel enthaltenden Einsatzflüssigkeit, wobei die Filtereinheit (100, 200, 300, 400) Folgendes umfasst:

   eine Filterkammer (101, 201, 301, 401), die sich entlang einer Achse (2) erstreckt und eine erste End- und eine zweite Endwand (101a, 201a, 301a, 401a, 101b, 201b, 301b, 401b), die sich gegenüberliegen, und mindestens eine Seitenwand (101c, 201c, 401c, 401d), die sich dazwischen erstreckt, umfasst, wobei sowohl die erste als auch die zweite Endwand (101a, 201a, 301a, 401a, 101b, 201b, 301b, 401b) mit der Achse (2) zusammenfallen,
   einen Filterkorb (102, 202, 302, 402), der innerhalb der Filterkammer (101, 201, 301, 401) enthalten und dazu konfiguriert ist, sich um die Achse (2) zu drehen, wobei der Filterkorb (102, 202, 302, 402) ein oder mehr als ein Filtermedium (103, 203, 303) zum Filtern von Mikropartikeln aus der Einsatzflüssigkeit umfasst;
   einen Einlass (104, 204, 304, 404), der dazu konfiguriert ist, Einsatzflüssigkeit durch die erste Endwand (101a, 201a, 301a, 401a) in die Filterkammer (101, 201, 301, 401) zu leiten;
   einen Auslass (105, 205, 305, 405) in der Filterkammer (101, 201, 301, 401) zum Herausleiten von gefilterter Flüssigkeit aus der Filterkammer (101, 201, 301, 401);
   eine Antriebswelle (107a, 207a, 307a, 407a), die dazu konfiguriert ist, die Drehung des Filterkorbs (102, 202, 302, 402) anzutreiben, wobei sich die Antriebswelle (107a, 207a, 307a, 407a) von der ersten Endwand (101a, 201a, 301a, 401a) der Filterkammer (101, 201, 301, 401) zu dem Filterkorb (102, 202, 302, 402) erstreckt;
   wobei die zweite Endwand (101b, 201b, 301b, 401b) eine Öffnung (106b, 206b, 306b, 406b) ist oder eine solche darin und einen entfernbaren Deckel (106a, 206a, 306a, 406a) umfasst, in einer ersten Konfiguration die Öffnung (106b, 206b, 306b, 406b) durch den entfernbaren Deckel (106a, 206a, 306a, 406a) verschlossen ist, sodass Einsatzflüssigkeit nicht durch die Öffnung (106b, 206b, 306b, 406b) gelangen kann, in einer zweiten Konfiguration der Deckel (106a, 206a, 306a, 406a) von der Öffnung (106b, 206b, 306b, 406b) entfernt ist, sodass gefilterte Mikropartikel aus der Filterkammer (101, 201, 301, 401) durch die Öffnung (106b, 206b, 306b, 406b) extrahierbar sind; und
   wobei die Antriebswelle (107a, 207a, 307a, 407a) eine mechanische Verbindung mit einem Antriebsmittel umfasst und das Antriebsmittel ein Elektromotor ist.

2. Filtereinheit (100, 200, 300, 400) nach Anspruch 1, wobei die Filtereinheit (100, 200, 300, 400) dazu betreibbar ist, gefilterte Mikropartikel aus der Filterkammer (101, 201, 301, 401) zu extrahieren, wenn sich die gefilterten Mikropartikel in einem entwässerten Zustand befinden;
   und/oder
   wobei der Filterkorb (102, 202, 302, 402) aus der Filterkammer (101, 201, 301, 401) über die Öffnung (106b, 206b, 306b, 406b) entfernbar ist und die gefilterten Mikropartikel aus der Filterkammer (101, 201, 301, 401) durch das Entfernen des Filterkorbs (102, 202, 302, 402) mit den gefilterten Mikropartikeln darauf extrahiert werden, wobei optional die gefilterten Mikropartikel durch die Öffnung (106b, 206b, 306b, 406b) in einer Richtung parallel zu der Achse (2) entfernbar sind.

3. Filtereinheit (100, 200, 300, 400) nach einem vorhergehenden Anspruch, wobei der Einlass (104, 204, 304, 404) koaxial zu der Achse (2) ist;
   und/oder

   wobei die Antriebswelle (107a, 207a, 307a, 407a) hohl ist und die Antriebswelle (107a, 207a, 307a, 407a) durch den Einlass (104, 204, 304, 404) verläuft;
   und/oder
   wobei der Filterkorb (102, 202, 302, 402) im Wesentlichen ein Zylinder, ein Ellipsoid oder ein Prisma ist und wobei sich der Filterkorb (102, 202, 302, 402) parallel zu der Achse (2) erstreckt;
   und/oder
   wobei der Filterkorb (102, 202, 302, 402) ein Innenvolumen umschließt und der Einlass (104, 204, 304, 404) angeordnet ist, um Einsatzflüssigkeit an das Innenvolumen des Filterkorbs (102, 202, 302, 402) zu liefern.

4. Filtereinheit (100, 200, 300, 400) nach einem vorhergehenden Anspruch, wobei die Antriebswelle (107a, 207a, 307a, 407a) und der Filterkorb (102, 202, 302, 402) jeweils eine Passfläche (102a, 302a, 107c, 307c) umfassen, was es der Antriebswelle (107a, 207a, 307a, 407a) ermöglicht, sich lösbar mit dem Filterkorb (102, 202, 302, 402) zu verbinden und dessen Drehung anzutreiben; optional wobei die Passfläche (107c, 307c) der Antriebswelle (107a, 207a, 307a, 407a) und/oder die Passfläche (102a, 302a) des Filterkorbs (102, 202, 302, 402) einen oder mehrere Keile umfasst.

**5.** Filtereinheit (100, 200, 300, 400) nach einem vorhergehenden Anspruch, wobei der Filterkorb (102, 202, 302, 402) eine lösbare Kappe (211, 411) umfasst, wobei optional die lösbare Kappe (211, 411) an die zweite Endwand (101b, 201b, 301b, 401b) angrenzt, wenn sich der Filterkorb (102, 202, 302, 402) in der Filterkammer (101, 201, 301, 401) befindet.

**6.** Filtereinheit nach Anspruch 5, wobei die lösbare Kappe (211, 411) eine mechanische Kupplung mit dem entfernbaren Deckel (106a, 206a, 306a, 406a) umfasst, wobei optional die mechanische Kupplung eine Drehung zwischen der lösbaren Kappe (211, 411) und dem entfernbaren Deckel (106a, 206a, 306a, 406a) ermöglicht.

**7.** Filtereinheit (100, 200, 300, 400) nach einem vorhergehenden Anspruch, umfassend ein Laufrad (230), das dazu konfiguriert ist, sich mit dem Filterkorb (102, 202, 302, 402) zu drehen.

**8.** Filtereinheit nach Anspruch 7, wobei das Laufrad (230) von dem Inneren oder Äußeren des Filterkorbs (102, 202, 302, 402) entfernbar ist, wobei das Laufrad (230) optional mechanisch mit dem entfernbaren Deckel (106a, 206a, 306a, 406a) oder mit der lösbaren Kappe (211, 411) verbunden ist, wenn von Anspruch 5 abhängig.

**9.** Filtereinheit (100, 200, 300, 400) nach einem vorhergehenden Anspruch, wobei die Filtereinheit (100, 200, 300, 400) ein Extraktionselement (490) umfasst, um gefilterte Mikropartikel aus dem Filterkorb (102, 202, 302, 402) zu extrahieren, wobei das Extraktionselement (490) optional dazu konfiguriert ist, in der axialen Richtung aus dem Filterkorb (102, 202, 302, 402) herausgezogen zu werden, wobei das Extraktionselement (490) ferner optional eine mechanische Kupplung mit dem entfernbaren Deckel (106a, 206a, 306a, 406a) oder mit der lösbaren Kappe (211, 411) umfasst, wenn von Anspruch 5 abhängig.

**10.** Filtereinheit nach Anspruch 9, wenn abhängig von Anspruch 7, wobei das Extraktionselement (490) an dem Laufrad (230) angebracht oder in dieses integriert ist.

**11.** Filtereinheit (100, 200, 300, 400) nach einem vorhergehenden Anspruch, wobei die Filterkammer (101, 201, 301, 401) ferner einen Entlüftungsauslass (336) an dem vertikal obersten Teil der Filterkammer (101, 201, 301, 401); oder einen sekundären Ablaufauslass (208) an dem vertikal untersten Teil der Filterkammer (101, 201, 301, 401) umfasst, wenn die Filtereinheit (100, 200, 300, 400) in Gebrauch ist; und/oder

wobei die Filtereinheit (100, 200, 300, 400) als ein Zentrifugalfilter zum Filtern von Mikropartikeln aus einer Mikropartikel enthaltenden Einsatzflüssigkeit betreibbar ist; und/oder

wobei die Filtereinheit (100, 200, 300, 400) dazu betreibbar ist, gefilterte Mikropartikel unter Verwendung von Zentrifugalkraft zu entwässern; und/oder

wobei die Filtereinheit (100, 200, 300, 400) im Gebrauch so orientiert ist, dass die Achse (2) parallel zu der horizontalen Ebene ist.

**12.** Filtereinheit (100, 200, 300, 400) nach einem vorhergehenden Anspruch, wobei das Filtermedium (103, 203, 303) Poren mit einer mittleren Porengröße von 10 bis 100 $\mu$m oder von 20 bis 70 $\mu$m umfasst; und/oder

wobei die Filterkammer (101, 201, 301, 401) zylindrisch ist und eine zylindrische Wand umfasst, die sich zwischen der ersten Endwand (101a, 201a, 301a, 401a) und der zweiten Endwand (101b, 201b, 301b, 401b) erstreckt, wobei sich der Auslass (105, 205, 305, 405) optional in der zylindrischen Wand befindet, wobei der Auslass (105, 205, 305, 405) optional tangential zu der zylindrischen Wand ist.

**13.** Textilbehandlungsvorrichtung, umfassend:

ein Gehäuse, das eine vordere Fläche, die für einen Benutzer zugänglich ist, und eine Tür darin umfasst;
eine Filtereinheit (100, 200, 300, 400) nach einem vorhergehenden Anspruch, die sich innerhalb des Gehäuses befindet;
eine Trommel, die innerhalb des Gehäuses enthalten ist, wobei die Trommel ein Innenvolumen und ein offenes Ende, das mit der Tür der vorderen Fläche des Gehäuses ausgerichtet ist, umfasst.

**14.** Textilbehandlungsvorrichtung nach Anspruch 13, wobei die Textilbehandlungsvorrichtung eine Waschmittelschublade umfasst, die sich auf der vorderen Fläche des Gehäuses befindet, wobei die Waschmittelschublade zwischen einer geschlossenen Konfiguration und einer offenen Konfiguration bewegbar ist, und wobei sich die Filtereinheit (100, 200, 300, 400) hinter der Waschmittelschublade befindet, wobei optional die Öffnung (106b, 206b, 306b, 406b) und der entfernbare Deckel (106a, 206a, 306a, 406a) an der zweiten Endwand (101b, 201b, 301b, 401b) der Filterkammer (101, 201, 301, 401) für einen Benutzer durch die Waschmittelschublade zugänglich sind, wenn sich die Waschmittelschublade in einer offenen Konfiguration befindet; oder

wobei sich die Öffnung (106b, 206b, 306b, 406b) und der entfernbare Deckel (106a, 206a, 306a, 406a) auf der vorderen Seite des Gehäuses befinden oder die Öffnung (106b, 206b, 306b, 406b) und der entfernbare Deckel (106a, 206a, 306a, 406a) durch eine Klappe oder Platte des Gehäuses abgedeckt sind.

15. Textilbehandlungsvorrichtung nach Anspruch 13 oder 14, wobei die Textilbehandlungsvorrichtung eine Waschmaschine ist.

16. Textilbehandlungsvorrichtung nach einem der Ansprüche 13 bis 15, wobei die Einsatzflüssigkeit von der Textilbehandlungsvorrichtung stammt.

17. Textilbehandlungsvorrichtung nach Anspruch 13 oder Anspruch 16, wobei der Auslass (105, 205, 305, 405) der Filtereinheit (100, 200, 300, 400) mit einem Ablauf der Textilbehandlungsvorrichtung verbunden ist.

18. Verwendung einer Filtereinheit (100, 200, 300, 400) oder einer Textilbehandlungsvorrichtung nach einem vorhergehenden Anspruch zum Filtern von Mikropartikeln aus einer Einsatzflüssigkeit.

19. Verfahren zum Filtern von Mikropartikeln aus einer Mikropartikel enthaltenden Einsatzflüssigkeit, wobei das Verfahren Folgendes umfasst:

    Bereitstellen einer Filtereinheit (100, 200, 300, 400) nach einem der Ansprüche 1 bis 12,
    Zuführen der Mikropartikel enthaltenden Einsatzflüssigkeit durch den Einlass (104, 204, 304, 404) an der ersten Endwand (101a, 201a, 301a, 401a);
    Drehen der Antriebseinheit, um den Filterkorb (102, 202, 302, 402) zu drehen;
    Herausleiten von gefilterter Einsatzflüssigkeit aus dem Auslass (105, 205, 305, 405); und
    Stoppen der Antriebseinheit und Zuführen von Einsatzflüssigkeit zu dem Einlass (104, 204, 304, 404).

20. Verfahren zum Filtern von Mikropartikeln nach Anspruch 19, umfassend Entwässern der gefilterten Mikropartikel durch Betreiben der Antriebseinheit, um den Filterkorb (102, 202, 302, 402) nach dem Stoppen der Zufuhr von Einsatzflüssigkeit zu drehen;
    und/oder
    ferner umfassend Extrahieren gefilterter Mikropartikel aus der Filterkammer (101, 201, 301, 401) über die Öffnung (106b, 206b, 306b, 406b), wobei das Extrahieren optional Entfernen des Filterkorbs (102, 202, 302, 402) mit darauf enthaltenen gefilterten Mikropartikeln durch die Öffnung (106b, 206b, 306b, 406b) umfasst, und, wenn abhängig von Anspruch 9 oder 10, wobei das Extrahieren ferner optional Entfernen des Filterkorbs (102, 202, 302, 402) mit darauf enthaltenen gefilterten Mikropartikeln durch die Öffnung (106b, 206b, 306b, 406b) und Entfernen des Extraktionselements (490) aus dem Filterkorb (102, 202, 302, 402) umfasst.

21. Verfahren zum Filtern von Mikropartikeln nach Anspruch 19 oder 20, wobei die Einsatzflüssigkeit von einer Textilbehandlungsvorrichtung zugeführt wird; optional wobei die Textilbehandlungsvorrichtung eine Waschmaschine ist; und/oder wobei die Textilbehandlungsvorrichtung ein oder mehrere cellulosehaltige Kleidungsstücke behandelt.

22. Verfahren zum Filtern von Mikropartikeln nach einem der Ansprüche 19 bis 21, wobei die Filtereinheit (100, 200, 300, 400) innerhalb eines Gehäuses der Textilbehandlungsvorrichtung enthalten ist, wobei das Gehäuse optional eine vordere Fläche mit einer sich darin befindenden Waschmittelschublade umfasst, wobei die Waschmittelschublade zwischen einer offenen und einer geschlossenen Konfiguration bewegbar ist, und wobei sich die Filtereinheit (100, 200, 300, 400) hinter der Waschmittelschublade befindet, wobei die Extraktion ferner optional zuerst Bewegen der Waschmittelschublade in eine offene Konfiguration umfasst; und/oder wobei die Mikropartikel Mikrofasern sind oder umfassen.

**Revendications**

1. Unité de filtrage (100, 200, 300, 400) destinée à filtrer des microparticules à partir d'un liquide d'alimentation contenant des microparticules, l'unité de filtrage (100, 200, 300, 400) comprenant :

    une chambre de filtrage (101, 201, 301, 401) s'étendant le long d'un axe (2), et comprenant des première et seconde parois d'extrémité opposées (101a, 201a, 301a, 401a, 101b, 201b, 301b, 401b) et au moins une paroi latérale (101c, 201c, 401c, 401d) s'étendant entre elles, lesdites première et seconde parois d'extrémité (101a, 201a, 301a, 401a, 101b, 201b, 301b, 401b) coïncidant avec l'axe (2), une cage de filtre (102, 202, 302, 402) contenue à l'intérieur de la chambre de filtrage (101, 201, 301, 401) et conçue pour tourner autour de l'axe (2), la cage de filtre (102, 202, 302, 402) comprenant un ou plusieurs milieux filtrants (103, 203, 303) pour filtrer des microparticules à partir du liquide d'alimentation ;

une entrée (104, 204, 304, 404) conçue pour faire passer le liquide d'alimentation à travers la première paroi d'extrémité (101a, 201a, 301a, 401a) dans la chambre de filtrage (101, 201, 301, 401) ;

une sortie (105, 205, 305, 405) dans la chambre de filtrage (101, 201, 301, 401) pour le passage de liquide filtré hors de la chambre de filtrage (101, 201, 301, 401) ;

un arbre d'entraînement (107a, 207a, 307a, 407a) conçu pour entraîner la rotation de la cage de filtre (102, 202, 302, 402), l'arbre d'entraînement (107a, 207a, 307a, 407a) s'étendant à partir de la première paroi d'extrémité (101a, 201a, 301a, 401a) de la chambre de filtrage (101, 201, 301, 401) jusqu'à la cage de filtre (102, 202, 302, 402) ;

ladite seconde paroi d'extrémité (101b, 201b, 301b, 401b) étant ou comprenant une ouverture (106b, 206b, 306b, 406b) dans celle-ci et un couvercle amovible (106a, 206a, 306a, 406a), dans une première configuration, ladite ouverture (106b, 206b, 306b, 406b) étant fermée par le couvercle amovible (106a, 206a, 306a, 406a) afin que le liquide d'alimentation ne puisse pas passer à travers l'ouverture (106b, 206b, 306b, 406b), dans une seconde configuration, ledit couvercle (106a, 206a, 306a, 406a) étant retiré de l'ouverture (106b, 206b, 306b, 406b) afin que les microparticules filtrées puissent être extraites de la chambre de filtrage (101, 201, 301, 401) à travers l'ouverture (106b, 206b, 306b, 406b) ; et

ledit arbre d'entraînement (107a, 207a, 307a, 407a) comprenant une connexion mécanique à un moyen d'entraînement, et ledit moyen d'entraînement étant un moteur électrique.

2. Unité de filtrage (100, 200, 300, 400) selon la revendication 1, ladite unité de filtrage (100, 200, 300, 400) servant à extraire des microparticules filtrées de la chambre de filtrage (101, 201, 301, 401) lorsque les microparticules filtrées sont dans un état essoré ; et/ou

ladite cage de filtre (102, 202, 302, 402) pouvant être retirée de la chambre de filtrage (101, 201, 301, 401) par l'intermédiaire de l'ouverture (106b, 206b, 306b, 406b), et lesdites microparticules filtrées étant extraites de la chambre de filtrage (101, 201, 301, 401) par le retrait de la cage de filtre (102, 202, 302, 402) avec les microparticules filtrées sur celle-ci, éventuellement lesdites microparticules filtrées pouvant être retirées à travers l'ouverture (106b, 206b, 306b, 406b) dans une direction parallèle à l'axe (2).

3. Unité de filtrage (100, 200, 300, 400) selon une quelconque revendication précédente, ladite entrée (104, 204, 304, 404) étant coaxiale à l'axe (2) ;

et/ou

ledit arbre d'entraînement (107a, 207a, 307a, 407a) étant creux, et ledit arbre d'entraînement (107a, 207a, 307a, 407a) passant à travers l'entrée (104, 204, 304, 404) ;

et/ou

ladite cage de filtre (102, 202, 302, 402) étant sensiblement un cylindre, un ellipsoïde ou un prisme et ladite cage de filtre (102, 202, 302, 402) s'étendant parallèlement à l'axe (2) ;

et/ou

ladite cage de filtre (102, 202, 302, 402) entourant un volume intérieur, et ladite entrée (104, 204, 304, 404) étant agencée pour délivrer un liquide d'alimentation au volume intérieur de la cage de filtre (102, 202, 302, 402).

4. Unité de filtrage (100, 200, 300, 400) selon une quelconque revendication précédente, ledit arbre d'entraînement (107a, 207a, 307a, 407a) et ladite cage de filtre (102, 202, 302, 402) comprenant chacun une surface d'accouplement (102a, 302a, 107c, 307c), qui permet à l'arbre d'entraînement (107a, 207a, 307a, 407a) de se raccorder de manière amovible à la cage de filtre (102, 202, 302, 402) et d'entraîner la rotation de celle-ci ; éventuellement, ladite surface d'accouplement (107c, 307c) de l'arbre d'entraînement (107a, 207a, 307a, 407a) et/ou ladite surface d'accouplement (102a, 302a) de la cage de filtre (102, 202, 302, 402) comprenant une ou plusieurs cannelures.

5. Unité de filtrage (100, 200, 300, 400) selon une quelconque revendication précédente, ladite cage de filtre (102, 202, 302, 402) comprenant un capuchon amovible (211, 411), éventuellement ledit capuchon amovible (211, 411) étant adjacent à la seconde paroi d'extrémité (101b, 201b, 301b, 401b) lorsque la cage de filtre (102, 202, 302, 402) est dans la chambre de filtrage (101, 201, 301, 401).

6. Unité de filtrage selon la revendication 5, ledit capuchon amovible (211, 411) comprenant un couplage mécanique au couvercle amovible (106a, 206a, 306a, 406a), éventuellement ledit couplage mécanique permettant une rotation entre le capuchon amovible (211, 411) et le couvercle amovible (106a, 206a, 306a, 406a).

7. Unité de filtrage (100, 200, 300, 400) selon une quelconque revendication précédente, comprenant une roue à palettes (230) conçue pour tourner avec la cage de filtre (102, 202, 302, 402).

8. Unité de filtrage selon la revendication 7, ladite roue à palettes (230) étant amovible de l'intérieur ou de l'extérieur de la cage de filtre (102, 202, 302, 402), éventuellement ladite roue à palettes (230) étant raccordée mécaniquement au couvercle amovible (106a, 206a, 306a, 406a) ou au capuchon amovible (211, 411) lorsqu'il dépend de la revendication 5.

9. Unité de filtrage (100, 200, 300, 400) selon une quelconque revendication précédente, ladite unité de filtrage (100, 200, 300, 400) comprenant un élément d'extraction (490) pour extraire des microparticules filtrées hors de la cage de filtre (102, 202, 302, 402), éventuellement ledit élément d'extraction (490) étant conçu pour être retiré dans la direction axiale hors de la cage de filtre (102, 202, 302, 402), en outre éventuellement ledit élément d'extraction (490) comprenant un couplage mécanique au couvercle amovible (106a, 206a, 306a, 406a) ou au capuchon amovible (211, 411) lorsqu'il dépend de la revendication 5.

10. Unité de filtrage selon la revendication 9 lorsqu'elle dépend de la revendication 7, ledit élément d'extraction (490) étant fixé ou intégré à la roue à palettes (230).

11. Unité de filtrage (100, 200, 300, 400) selon une quelconque revendication précédente, ladite chambre de filtrage (101, 201, 301, 401) comprenant en outre une sortie de purge d'air (336) au niveau de la partie la plus haute verticalement de la chambre de filtrage (101, 201, 301, 401) ; ou une sortie de drain secondaire (208) au niveau de la partie la plus basse verticalement de la chambre de filtrage (101, 201, 301, 401) lorsque l'unité de filtrage (100, 200, 300, 400) est en cours d'utilisation ; et/ou

   ladite unité de filtrage (100, 200, 300, 400) servant de filtre centrifuge pour filtrer des microparticules à partir d'un liquide d'alimentation contenant des microparticules ; et/ou
   ladite unité de filtrage (100, 200, 300, 400) servant à essorer des microparticules filtrées en à l'aide de la force centrifuge ; et/ou
   lors de l'utilisation, ladite unité de filtrage (100, 200, 300, 400) étant orientée de sorte que l'axe (2) soit parallèle au plan horizontal.

12. Unité de filtrage (100, 200, 300, 400) selon une quelconque revendication précédente, ledit milieu filtrant (103, 203, 303) comprenant des pores avec une taille de pore moyenne allant de 10 à 100 $\mu$m, ou allant de 20 à 70 $\mu$m ; et/ou
   ladite chambre de filtrage (101, 201, 301, 401) étant cylindrique et comprenant une paroi cylindrique s'étendant entre la première paroi d'extrémité (101a, 201a, 301a, 401a) et la seconde paroi d'extrémité (101b, 201b, 301b, 401b), éventuellement ladite sortie (105, 205, 305, 405) étant dans la paroi cylindrique, éventuellement où la sortie (105, 205, 305, 405) est tangentielle à la paroi cylindrique.

13. Appareil de traitement de textile comprenant :

   un boîtier comprenant une face avant accessible par un utilisateur et une porte dans celle-ci ;
   une unité de filtrage (100, 200, 300, 400) selon une quelconque revendication précédente située à l'intérieur du boîtier ;
   un tambour contenu à l'intérieur du boîtier, le tambour comprenant un volume intérieur et une extrémité ouverte alignée avec la porte de la face avant du boîtier.

14. Appareil de traitement de textile selon la revendication 13, ledit appareil de traitement de textile comprenant un tiroir de détergent situé dans la face avant du boîtier, le tiroir de détergent pouvant être déplacé entre une configuration fermée et une configuration ouverte, et ladite unité de filtrage (100, 200, 300, 400) étant située derrière le tiroir de détergent, éventuellement ladite ouverture (106b, 206b, 306b, 406b) et ledit couvercle amovible (106a, 206a, 306a, 406a) au niveau de la seconde paroi d'extrémité (101b, 201b, 301b, 401b) de la chambre de filtrage (101, 201, 301, 401) étant accessibles par un utilisateur à travers le tiroir de détergent lorsque le tiroir de détergent est dans une configuration ouverte ; ou
   ladite ouverture (106b, 206b, 306b, 406b) et ledit couvercle amovible (106a, 206a, 306a, 406a) étant dans la face avant du boîtier ou ladite ouverture (106b, 206b, 306b, 406b) et ledit couvercle amovible (106a, 206a, 306a, 406a) étant recouverts par un rabat ou un panneau du boîtier.

15. Appareil de traitement de textile selon la revendication 13 ou 14, ledit appareil de traitement de textile étant une machine à laver.

16. Appareil de traitement de textile selon l'une quelconque des revendications 13 à 15, ledit liquide d'alimentation provenant de l'appareil de traitement de textile.

17. Appareil de traitement de textile selon la revendication 13 ou la revendication 16, ladite sortie (105, 205, 305, 405) de l'unité de filtrage (100, 200, 300, 400) étant raccordée à un drain de l'appareil de traitement de textile.

18. Utilisation d'une unité de filtrage (100, 200, 300, 400) ou d'un appareil de traitement de textile selon une quelconque revendication précédente en vue du filtrage des microparticules à partir d'un liquide d'alimentation.

19. Procédé de filtration de microparticules à partir d'un liquide d'alimentation contenant des microparticules, le procédé comprenant :

la fourniture d'une unité de filtrage (100, 200, 300, 400) selon l'une quelconque des revendications 1 à 12,
l'approvisionnement en liquide d'alimentation contenant des microparticules à travers l'entrée (104, 204, 304, 404) au niveau de la première paroi d'extrémité (101a, 201a, 301a, 401a) ;
la rotation de l'unité d'entraînement pour faire tourner la cage de filtre (102, 202, 302, 402) ;
le passage du liquide d'alimentation filtré hors de la sortie (105, 205, 305, 405) ; et
l'arrêt de l'unité d'entraînement et de l'approvisionnement en liquide d'alimentation de l'entrée (104, 204, 304, 404).

20. Procédé de filtration de microparticules selon la revendication 19, comprenant l'essorage des microparticules filtrées en actionnant l'unité d'entraînement pour faire tourner la cage de filtre (102, 202, 302, 402) après avoir arrêté l'approvisionnement en liquide d'alimentation ;
et/ou
comprenant en outre l'extraction de microparticules filtrées de la chambre de filtrage (101, 201, 301, 401) par l'intermédiaire de l'ouverture (106b, 206b, 306b, 406b), ladite extraction comprenant éventuellement le retrait de la cage de filtre (102, 202, 302, 402) avec des microparticules filtrées contenues sur celle-ci à travers l'ouverture (106b, 206b, 306b, 406b), et, lorsqu'elle dépend de la revendication 9 ou 10, ladite extraction comprenant en outre éventuellement le retrait de la cage de filtre (102, 202, 302, 402) avec des microparticules filtrées contenues sur celle-ci à travers l'ouverture (106b, 206b, 306b, 406b) et le retrait de l'élément d'extraction (490) de la cage de filtre (102, 202, 302, 402).

21. Procédé de filtration de microparticules selon la revendication 19 ou 20, l'approvisionnement en liquide d'alimentation est assuré par un appareil de traitement de textile ; éventuellement ledit appareil de traitement de textile étant une machine à laver ;
et/ou
ledit appareil de traitement de textile traitant un ou plusieurs vêtements contenant de la cellulose.

22. Procédé de filtrage de microparticules selon l'une quelconque des revendications 19 à 21, ladite unité de filtrage (100, 200, 300, 400) étant contenue à l'intérieur d'un boîtier de l'appareil de traitement de textile, éventuellement ledit boîtier comprenant une face avant avec un tiroir de détergent situé à l'intérieur, le tiroir de détergent pouvant être déplacé entre une configuration ouverte et une configuration fermée, et ladite unité de filtrage (100, 200, 300, 400) étant située derrière le tiroir de détergent, en outre éventuellement ladite extraction comprenant d'abord le déplacement du tiroir de détergent vers une configuration ouverte ;
et/ou
lesdites microparticules étant ou comprenant des microfibres.

FIG 1

FIG 2a

FIG 2b

FIG 2c

**FIG 2d**

EP 4 255 604 B1

FIG 2e

FIG 2f

206a

211

221

203

202

264

266

265

207f

207a

**FIG 2g**

**FIG 2h**

**FIG 2i**

EP 4 255 604 B1

FIG 2j

FIG 3

FIG 4

EP 4 255 604 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017173215 A
- US 2018320306 A
- WO 2019122862 A
- EP 3124674 A1
- WO 2019017850 A1

**Non-patent literature cited in the description**

- **I.E. NAPPER et al.** *Science of the Total Environment*, 2020, vol. 738, 140412